(19) Europäisches Patentamt
European Patent Office
Office européen des brevets

(11) EP 1 930 748 A1

(12) **EUROPEAN PATENT APPLICATION**
published in accordance with Art. 153(4) EPC

(43) Date of publication:
**11.06.2008 Bulletin 2008/24**

(21) Application number: **06783128.9**

(22) Date of filing: **28.08.2006**

(51) Int Cl.:
***G02B 5/30*** *(2006.01)* ***G02F 1/1335*** *(2006.01)*

(86) International application number:
**PCT/JP2006/316899**

(87) International publication number:
**WO 2007/026659 (08.03.2007 Gazette 2007/10)**

(84) Designated Contracting States:
**DE FR GB**

(30) Priority: **30.08.2005 JP 2005248639**

(71) Applicants:
- **NITTO DENKO CORPORATION**
  **Ibaraki-shi, Osaka 567-8680 (JP)**
- **TORAY INDUSTRIES, INC.**
  **Tokyo 103-0022 (JP)**

(72) Inventors:
- **NAKATA, Mie**
  **Ibaraki-shi**
  **Osaka 567-8680 (JP)**
- **NAKANO, Yuuki**
  **Ibaraki-shi**
  **Osaka 567-8680 (JP)**
- **TSUJIUCHI, Naoki**
  **Ibaraki-shi**
  **Osaka 567-8680 (JP)**
- **TSUKUDA, Akimitsu**
  **Otsu-shi**
  **Shiga 520-2153 (JP)**
- **MORIYAMA, Hideki**
  **Otsu-shi**
  **Shiga 520-0842 (JP)**

(74) Representative: **Koepe, Gerd L.**
**Koepe & Partner,**
**Patentanwälte,**
**Postfach 22 12 64**
**80502 München (DE)**

(54) **POLARIZER PROTECTIVE FILM, POLARIZING PLATE AND IMAGE DISPLAY**

(57) The present invention provides: a polarizer protective film that has high heat resistance, high transparency, high optical properties, and high mechanical strength, and is excellent in adhesion with respect to a polarizer and can be prescribed to be thin; a polarizing plate using the polarizer protective film and a polarizer, in which the adhesion between the polarizer protective film and the polarizer is high, and which is excellent in optical properties and heating and humidification durability; and an image display apparatus of high quality using the polarizing plate. The polarizer protective film of the present invention includes an acrylic resin containing a particular acrylate-based structural unit and a specific cyclic structural unit.

Fig.1

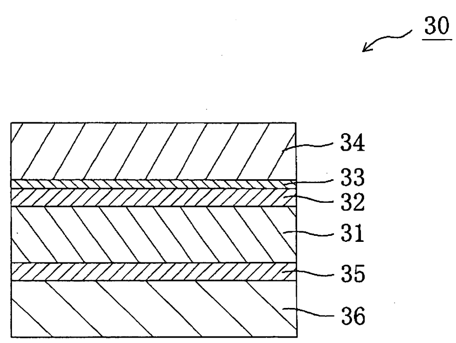


EP 1 930 748 A1

## Description

TECHNICAL FIELD

The present invention relates to a polarizer protective film, a polarizing plate, and an image display apparatus such as a liquid crystal display apparatus, an organic EL display apparatus, or a PDP including at least one polarizing plate.

BACKGROUND ART

It is essential for a liquid crystal display apparatus to have polarizing plates arranged on both sides of a glass substrate forming the surface of a liquid crystal panel due to its image forming system. An example of such a polarizing plate to be used is generally produced by attaching a polarizer protective film formed of a cellulose-based resin film such as triacetyl cellulose on each side of a polarizermade of a polyvinyl alcohol-based film and a dichromatic substance such as iodine by using a polyvinyl alcohol-based adhesive.

Cellulose-based resin films have insufficient heat and humidity resistance and thus have a problem in that properties such as a polarization degree and a hue of a polarizing plate degrade when a polarizing plate using a cellulose-based resin film as a polarizer protective film is used under high temperature or high humidity conditions. Further, a cellulose-based resin film causes retardation with respect to incident light in an oblique direction. With recent increase in the size of a liquid crystal display, the retardation increasingly has significant effects on viewing angle properties.

As a resin material excellent in heat resistance and optical transparency, a poly(meth)acrylate such as polymethyl methacrylate is known (for example, see Patent Document 1) . However, a poly(meth)acrylate such as polymethyl methacrylate is brittle and is likely to be cracked, so it has a problem regarding the transportability such as rupture during film transport and a problem of poor productivity. Therefore, it is difficult to use a poly(meth)acrylate such as polymethyl methacrylate as it is for a polarizer protective film.

In order to provide a poly(meth)acrylate such as polymethyl methacrylate with stiffness, a polarizer protective film made of a composition containing an acrylic resin (A) which contains methyl methacrylate as a main component and a stiffness improver (B) (preferably, a shock-resistant acryl rubber-methyl methacrylate graft copolymer and butyl modified acetyl cellulose) has been proposed (for example, see Patent Document 2). However, in this polarizer protective film, for the purpose of enhancing mechanical strength, a great amount of the stiffness improver (B) (acrylic resin (A) /stiffness improver (B) = 60/40 to 90/10 in a weight ratio) of which refractive index is not adjusted with that of the acrylic resin is used, and as a result, there arise problems in that the high heat resistance, high transparency, and high optical properties which the acrylic resin (A) has intrinsically are impaired.

As a film preferred for a polarizer protective film that is excellent in heat resistance, optical transparency, and productivity, and is provided with stiffness, a three-layered film including an acrylic thermoplastic copolymer layer has been proposed (for example, see Patent Document 3). However, the three-layered film has a configuration in which three layers are laminated, so a lamination step is required during production, and the thickness of a film to be obtained increases. Thus, it is difficult to form a thin film in which the current demand for the mobile use is large. Patent Document 1: JP 2000-356714 A

Patent Document 2: JP 05-119217 A
Patent Document 3: JP 2004-291302 A

DISCLOSURE OF THE INVENTION

PROBLEMS TO BE SOLVED BY THE INVENTION

The present invention has been made in view of solving the above conventional problems, and an object of the present invention is to provide: (1) a polarizer protective film that has high heat resistance, high transparency, high optical properties, and high mechanical strength, and is excellent in adhesion with a polarizer and can be prescribed to be thin; (2) a polarizing plate using the polarizer protective film and a polarizer, in which the adhesion between the polarizer protective film and the polarizer is high, and which is excellent in optical properties and heating and humidification durability; and (3) an image display apparatus of high quality using the polarizing plate.

MEANS FOR SOLVING THE PROBLEMS

A polarizer protective film according to the present invention includes an acrylic resin containing a structural unit represented by the following General Formula (1) and a structural unit represented by the following General Formula (2):

[Chemical Formula 1]

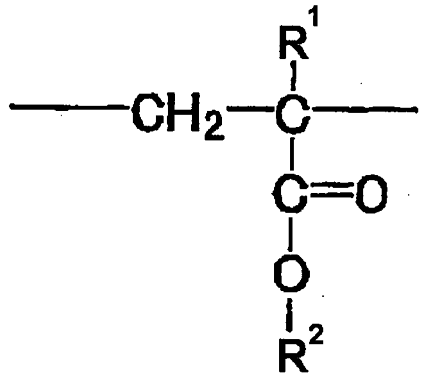

(1)

in General Formula (1), $R^1$ represents a hydrogen atom or an alkyl group containing 1 to 5 carbon atoms, and $R^2$ represents an aliphatic hydrocarbon group containing 1 to 5 carbon atoms or alicyclic hydrocarbon group; and

[Chemical Formula 2]

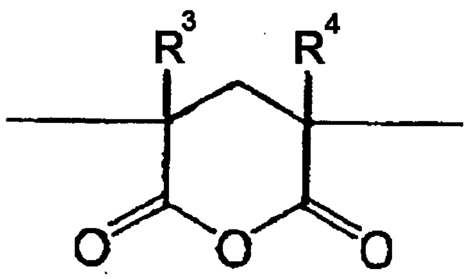

(2)

in General Formula (2), $R^3$ and $R^4$ each represent a hydrogen atom or an alkyl group containing 1 to 5 carbon atoms, which are same as or different from each other.

In a preferred embodiment,the polarizer protective film has an in-plane retardation Δnd with respect to light having a wavelength of 590 nm of 10 nm or less, a thickness direction retardation Rth with respect to light having a wavelength of 590 nm of 10 nm or less, and a photoelastic coefficient with respect to light having a wavelength of 550 nm of $-2 \times 10^{-12}$ to $2 \times 10^{-12}$ $Pa^{-1}$.

In a preferred embodiment, $R^3$ and $R^4$ of the above General Formula (2) are a methyl group and a methyl group, respectively.

In a preferred embodiment, the polarizer protective film has a glass transition temperature of 110°C or higher.

In a preferred embodiment,the polarizer protective film has a moisture permeability of 3 to 100 $g/m^2 \cdot 24$ hr.

In a preferred embodiment, the polarizer protective film has a thickness of 5 to 100 μm.

According to another aspect of the present invention, a polarizing plate is provided. The polarizing plate of the present invention includes the polarizer protective film of the present invention on at least one surface of a polarizer formed of a polyvinyl alcohol-based resin, in which a polarization degree change ratio defined by the following Expression (A) after retention for 492 hours under 60°C/95%RH is -0.5 to 0.0%.

$$\text{Polarization degree change ratio (\%)} = \{(P_t - P_0)/P_0\} \times 100$$

(A)

$P_0$: initial polarization degree
$P_t$: polarization degree after t hour(s).

Another polarizing plate of the present invention includes the polarizer protective film of the present invention on at least one surface of a polarizer formed of a polyvinyl alcohol-based resin, in which a transmittance change ratio defined by the following Expression (B) after retention for 492 hours under 60°C/95%RH is 0.0 to 2.5%.

$$\text{Transmittance change ratio (\%)} = \{(Y_t - Y_0)/Y_0\} \times 100 \quad (B)$$

$Y_0$: initial transmittance
$Y_t$: transmittance after t hour(s).

Another polarizing plate of the present invention includes the polarizer protective film of the present invention on at least one surface of a polarizer formed of a polyvinyl alcohol-based resin, in which an Rth change ratio defined by the following Expression (C) after retention for 48 hours under 80°C is -2.0 to 0.0%.

$$\text{Rth change ratio (\%)} = \{(Rth_t - Rth_0)/Rth_0\} \times 100 \quad (C)$$

$Rth_0$: initial Rth
$Rth_t$: Rth after t hour(s).

Another polarizing plate of the present invention includes the polarizer protective film of the present invention on at least one surface of a polarizer formed of a polyvinyl alcohol-based resin, in which an Rth change ratio defined by the following Expression (D) after retention for 48 hours under 60°C/95%RH is -2.5 to 0.0%.

$$\text{Rth change ratio (\%)} = \{(Rth_t - Rth_0)/Rth_0\} \times 100 \quad (D)$$

$Rth_0$: initial Rth
$Rth_t$: Rth after t hour(s).

In a preferred embodiment, the polarizing plate includes the polarizer protective film on one surface of the polarizer and a cellulose-based resin film on another surface.

In a preferred embodiment, the polarizing plate includes the polarizer protective film on both surface of the polarizer.

In a preferred embodiment, the polarizing plate includes an easy-adhesion layer and an adhesive layer between the polarizer protective film and the polarizer.

In a preferred embodiment, the adhesive layer is formed of a polyvinyl alcohol-based adhesive.

In a preferred embodiment, a pressure-sensitive adhesive layer is further included as at least one side of an outermost layer.

According to another aspect of the present invention, an image display apparatus is provided. The image display apparatus of the present invention includes at least one polarizing plate of the present invention.

## EFFECTS OF THE INVENTION

According to the present invention, there maybe provided a polarizer protective film, which has high heat resistance, high transparency,high opticalproperties,and high mechanical strength, and which is excellent in adhesion with a polarizer and can be prescribed to be thin. Further, a polarizing plate using the polarizer protective film and a polarizer can be provided, in which the adhesion between the polarizer protective film and the polarizer is high, and which is excellent in optical properties and heating and humidification durability, and an image display apparatus of high quality using the polarizing plate can be provided. The polarizer protective film of the present invention has a low film retardation (about 0), so it is advantageous for optical design without the occurrence of a color shift. The polarizer protective film of the present invention has a low photoelastic coefficient, so peripheral unevenness which has been a problem in a conventional polarizing plate using a cellulose-based resin film can be suppressed. The polarizer protective film of the present invention has low moisture permeability, so it is strong under a humidified condition and has high durability.

The above effects can be expressed by adopting, as a polarizer protective film, a polarizer protective film containing an acrylic resin including an acrylate-based structural unit having particular optical properties and a particular

cyclic structural unit.

BRIEF DESCRIPTION OF THE DRAWINGS

Fig. **1** is a cross-sectional view showing an example of a polarizing plate of the present invention.
FIG. **2** is a schematic cross-sectional view of a liquid crystal display apparatus according to a preferred embodiment of the present invention.

DESCRIPTION OF SYMBOLS

| | |
|---|---|
| **10** | liquid crystal cell |
| **11, 11'** | glass substrate |
| **12** | liquid crystal layer |
| **13** | spacer |
| **20, 20'** | retardation film |
| **30, 30'** | polarizing plate |
| **31** | polarizer |
| **32** | adhesive layer |
| **33** | easy-adhesion layer |
| **34** | polarizer protective film |
| **35** | adhesive layer |
| **36** | polarizer protective film |
| **40** | light guide plate |
| **50** | light source |
| **60** | reflector |
| **100** | liquid crystal display apparatus |

BEST MODE FOR CARRYING OUT THE INVENTION

Hereinafter, description will be given of preferred embodiments of the present invention, but the present invention is not limited to the embodiments.

(Polarizer protective film)

The polarizer protective film of the present invention contains an acrylic resin including a structural unit represented by the following General Formula (1) and a structural unit represented by the following General Formula (2):

[Chemical Formula 3]

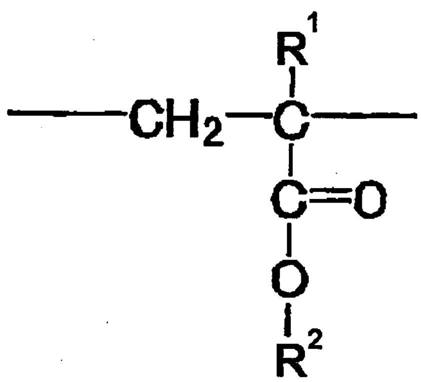

(1)

in General Formula (1), $R^1$ represents a hydrogen atom or an alkyl group containing 1 to 5 carbon atoms, and $R^2$ represents an aliphatic hydrocarbon group containing 1 to 5 carbon atoms or alicyclic hydrocarbon group; and

[Chemical Formula 4]

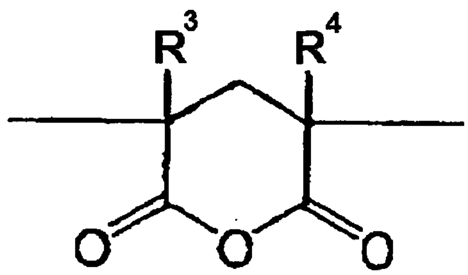

(2)

in General Formula (2), $R^3$ and $R^4$ each represent a hydrogen atom which are same as or different from each other or an alkyl group containing 1 to 5 carbon atoms.

Preferred specific examples of the structural unit represented by General Formula (1) include, as a corresponding monomer, methyl (meth)acrylate, ethyl (meth)acrylate, n-propyl (meth)acrylate, n-butyl (meth)acrylate, t-butyl (meth) acrylate, n-hexyl (meth)acrylate, cyclohexyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahyroxyhexyl (meth) acrylate, and 2,3,4,5-tetrahydroxypentyl (meth) acrylate. They may be used alone or in combination. Of those, methyl (meth)acrylate is preferred, and methyl methacrylate is particularly preferred, in terms of the excellent heat stability. More specifically, in General Formula (1), it is particularly preferred that $R^1$ is a methyl group and $R^2$ is a methyl group.

The content ratio of the structural unit represented by General Formula (1) in the structure of the acrylic resin is preferably 50 to 95 mol%, more preferably 55 to 90 mol%, still more preferably 60 to 85 mol%, particularly preferably 65 to 80 mol%, and most preferably 65 to 75 mol%. When the content ratio is less than 50 mol%, the effect expressed owing to the structural unit represented by General Formula (1), e.g., high heat resistance and high transparency, may not be exhibited sufficiently. When the content ratio is more than 95 mol%, the resin is brittle and is likely to be cracked, with the result that high mechanical strength cannot be exhibited sufficiently, which may degrade productivity.

The content ratio of the structural unit represented by General Formula (2) in the structure of the acrylic resin is preferably 5 to 50 mol%, more preferably 10 to 45 mol%, still more preferably 15 to 40 mol%, particularly preferably 20 to 35 mol%, and most preferably 25 to 35 mol%. When the content ratio is less than 5 mol%, the effect expressed owing to the structural unit represented by General Formula (2), e.g., high optical properties, high mechanical strength, excellent adhesion with the polarizer, and reduction in thickness, may not be exhibited sufficiently. When the content

ratio is more than 50 mol%, high heat resistance and high transparency, for example, may not be exhibited sufficiently.

The structural unit represented by General Formula (2) in the structure of the acrylic resin is preferably included in a structural unit represented by the following General Formula (3) :

[Chemical Formula 5]

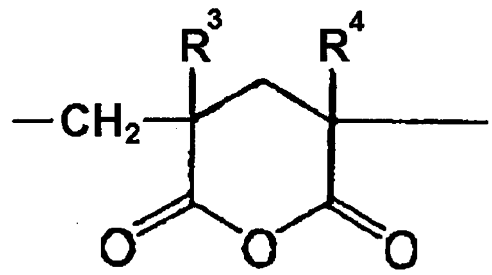

(3)

in General Formula (3), $R^3$ and $R^9$ each represent a hydrogen atom or an alkyl group containing 1 to 5 carbon atoms, which are same as or different from each other.

In General Formulae (2) and (3), it is preferred that $R^3$ and $R^4$ be a hydrogen atom or a methyl group, and it is more preferred that both of them be methyl groups.

The acrylic resin may include another structural unit other than the structural unit represented by General Formula (1) and the structural unit represented by General Formula (2) . Examples of the another structural unit include a structural unit (A) other than the structural unit represented by General Formula (1), which is formed by polymerizing unsaturated carboxylate monomer, and a structural unit (B) formed by polymerizing another vinyl-based monomer.

As the unsaturated carboxylate monomer forming the structural unit (A), exemplified are methyl acrylate, ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, and 2,3,4,5-tetrahydroxypentyl (meth) acrylate. They may be used alone or in combination.

As other vinyl-based monomers each forming the structural unit (B), exemplified are acrylonitrile, methacrylonitrile, ethacrylonitrile, allylglycidyl ether, maleic anhydride, itaconic anhydride, N-methyl maleimide, N-ethyl maleimide, N-cyclohexyl maleimide, acrylamide, methacrylamide, N-methyl acrylamide, butoxymethyl acrylamide, N-propyl methacrylamide, aminoethyl acrylate, propylaminoethyl acrylate, dimethylaminoethyl methacrylate, ethylaminopropyl methacrylate, cyclohexylaminoethyl methacrylate, N-vinyldiethylamine, N-acetylvinylamine, allylamine, methallylamine, N-methylallylamine, 2-isopropenyl-oxazoline, 2-vinyl-oxazoline, 2-acryloyl-oxazoline, N-phenyl maleimide, phenylaminoethyl methacrylate, styrene, $\alpha$-methyl styrene, p-glycidyl styrene, p-aminostyrene, and 2-styryl oxazoline. They may be used alone or in combination.

In the structural unit (B), the content concentration of a styrene-based structural unit such as styrene or $\alpha$-methylstyrene is preferably set to be 0 to 1 wt% and more preferably set to be 0 to 0.1 wt%. By setting the content concentration of the styrene-based structural unit to be 0 to 1 wt%, the degradation in a retardation and the decrease in transparency can be prevented.

The acrylic resin contains preferably 0 to 10 wt%, more preferably 0 to 5 wt%, and still more preferably 0 to 1 wt% of a structural unit derived from unsaturated carboxylic acid. By setting the structural unit derived from unsaturated carboxylic acid in the acrylic resin to be 10 wt% or less, colorless transparency, retention stability, and humidity resistance can be maintained.

The weight average molecular weight of the acrylic resin is preferably 1, 000 to 2, 000, 000, more preferably 5, 000 to 1, 000, 000, still more preferably 10,000 to 500,000, particularly preferably 50, 000 to 500, 000, and most preferably 60,000 to 150, 000. When the weight average molecular weight is out of the above range, the effects of the present invention may not be exhibited sufficiently.

The glass transition temperature (Tg) of the acrylic resin is preferably 110˚C or higher, more preferably 115˚C or higher, still more preferably 120 ˚C or higher, particularly preferably 125˚C or higher, and most preferably 130˚C or higher. When the Tg is 110˚C or higher, in a case where the acrylic resin having such a Tg is finally incorporated in a polarizing plate, for example, the polarizing plate is likely to have excellent durability. The upper limit value of the Tg of

the acrylic resin is not particularly limited. However, it is preferably 300°C or lower, more preferably 290°C or lower, still more preferably 285°C or lower, particularly preferably 200°C or lower, and most preferably 160°C or lower in view of the forming property and the like.

Regarding the acrylic resin, the total light transmittance measured by a method pursuant to ASTM-D-1003 of a molding obtained by injection molding is preferably as high as possible, and is preferably 85% or higher, more preferably 88% or higher, and still more preferably 90% or higher. When the total light transparency is less than 85%, the transparency decreases, which may make it impossible to use the resultant polarizing plate for the intended application.

It is preferred that the acrylic resin have a high light transmittance, and a low in-plane retardation $\Delta$nd and a low thickness direction retardation Rth.

The content of the acrylic resin in the polarizer protective film of the present invention is preferably 50 to 100 wt%, more preferably 60 to 100 wt%, still more preferably 70 to 100 wt%, and particularly preferably 80 to 100 wt%. In a case where the content of the acrylic resin in the polarizer protective film of the present invention is less than 50 wt%, there is a fear that the high heat resistance and high transparency originally owned by the acrylic resin may not be reflected sufficiently.

The polarizer protective film of the present invention may further contain in a range not impairing the obj ect of the present invention: another thermoplastic resins such as polyethylene, polypropylene, polyamide, polyphenylene sulfide, polyether ether ketone, polyester, polysulfon, polyphenylene oxide, polyacetal, polyimide, and polyetherimde; and thermosetting resins such as a phenol-based resin, a melamine-based resin, a polyester-based resin, a silicone-based resin, and an epoxy-based resin. The polarizer protective film of the present invention may further contain additives including: UV-absorber or antioxidant such as a hindered phenol-based, benzotriazole-based, benzophenone-based, benzoate-based, or cyanoacrylate-based UV-absorber or antioxidant; lubricant or plasticizer such as a higher fatty acid, acid ester-based, acid amide-based, higher alcohol lubricant or plasticizer; a releasing agents such as montanoic acid, its salts, its esters, its half esters, stearyl alcohol, stearamide, and ethylene wax; a coloring preventives such as phosphate and hypophosphite; a halogen-based flame retardant or non-halogen-based flame retardant such as phosphorus-based or silicone-based flame retardant; nucleation agent; antistatic agent such as an amine-based, sulfonic acid-based, or polyether-based antistatic agent; and a colorant such as a pigment. It should be noted that these additives are preferably added in a range not decreasing the transparency of the polarizer protective film of the present invention, in view of the properties required by the use to be applied. Specifically, it is preferred that the total content of the resins and additives other than the acrylic resin and the acrylic elastic particles with respect to the polarizer protective film of the present invention is set to be 10 wt% or less.

The polarizer protective film of the present invention, in order to provide weather resistance, preferably contains a UV-absorber. The melting point of the UV-absorber is preferably 110°C or higher, and more preferably 120°C or higher. When the melting point of the UV-absorber is 130°C or higher, the volatilization during heat-melting processing occurs less, which makes it difficult to contaminate a roll in the course of production of a film. The kind of the UV-absorber is not particularly limited. However, a benzotriazole-based UV-absorber with a molecular weight of 400 or more and a triazine-based UV-absorber with a molecular weight of 400 or more are particularly preferred. Examples of the commercially available products include "TINUVIN 1577" (manufactured by Ciba Specialty Chemicals Inc.) and "Adekastab LA-31" (manufactured by ADEKA Corporation).

Regarding the optical properties of the polarizer protective film, the retardation in front and thickness directions poses a problem. Therefore, the polarizer protective film of the present invention may contain a retardation reducing agent. As the retardation reducing agent, for example, a styrene-containing polymer such as an acrylonitrile-styrene block copolymer is preferred. The adding amount of the retardation reducing agent is preferably 30 wt% or less, more preferably 25 wt% or less, and still more preferably 20 wt% or less with respect to the polymethyl methacrylate-based resin. In a case where the retardation reducing agent is added in an amount exceeding this range, visible light may be scattered, and transparency may be impaired, with the result that the polarizer protective film may lack properties thereof.

The polarizer protective film of the present invention may contain acrylic elastic particles in addition to the acrylic resin. The stiffness excellent as the polarizer protective film can be obtained when the acrylic elastic particles are dispersed in the polarizer protective film.

It is preferred that the acrylic elastic particles contain a rubber polymer. The rubber polymer contains, as a requisite component, an acrylic component such as ethyl acrylate or butyl acrylate as a material monomer, and examples of the other preferred components include: silicone components such as a dimethylsiloxane and phenylmethylsiloxane; styrene components such as styrene and $\alpha$-methylstyrene; nitrile components such as acrylonitrile and methacrylnitrile; conjugated diene components such as butadiene and isoprene; urethane components; ethylene components; propylene components; and isobutene components. Of those, the rubber polymer preferably contains at least one kind selected from the acryl component, the silicone component, the styrene component, the nitrile component, and the conjugated diene component. The rubber polymer may contain a single polymer of a material monomer (preferably, each of the above components), a copolymer of at least two kinds of material monomers, or both of them. More preferred examples of the rubber polymer include a rubber polymer of a combination of two or more kinds of the above components, e.g.,

a rubber polymer containing an acrylic component and a silicone component, a rubber polymer containing an acrylic component and a styrene component, a rubber polymer containing an acrylic component and a conjugated diene component, and a rubber polymer containing an acrylic component, a silicone component, and a styrene component.

A rubber polymer containing a cross-linking component such as divinylbenzene, allylacrylate, or butylene glycol diacrylate in addition to the above components is also preferred.

It is preferred that a polymer having a combination of an alkyl acrylate unit and an aromatic vinyl-based unit are contained as the rubber polymer. An alkyl acrylate unit, in particular, butyl acrylate is very effective for enhancing stiffness, and an aromatic vinyl-based unit (e.g., styrene) is copolymerized with butyl acrylate, whereby the refractive index of the acryl elastic particles can be adjusted.

The refractive index difference between the acrylic elastic particles and the acrylic resin is preferably 0.01 or less. This is because high transparency can be obtained in the polarizer protective film of the present invention. As a method of setting the refractive index difference between the acrylic elastic particles and the acrylic resin to be 0.01 or less, any suitable method can be adopted. Examples thereof include amethodof adjusting the composition ratio of each monomer unit constituting the acrylic resin, and a method of adjusting the composition ratio of a rubber polymer or each monomer contained in the acrylic elastic particles. In particular, an aromatic vinyl-based unit such as styrene is copolymerized with an alkyl acrylate such as butyl acrylate, and the copolymerization ratio thereof is adjusted, whereby acryl elastic particles with a small refractive index difference with respect to the acrylic resin can be obtained.

The average particle diameter of the acrylic elastic particles is preferably 70 to 300 nm, and more preferably 100 to 200 nm. In the case where the average particle diameter is less than 70 nm, the effect of improving stiffness may not be sufficient, and in the case where the average particle diameter of the acrylic elastic particles is larger than 300 nm, heat resistance may be decreased.

The content of the acrylic elastic particles in the polarizer protective film of the present invention is preferably 7 to 40 wt%, and more preferably 12 to 20 wt%. In the case where the content is less than 7 wt%, the improvement of stiffness may not be sufficient, and in the case where the content exceeds 40 wt%, heat resistance may be decreased.

The polarizer protective film of the present invention may be stretched by longitudinal stretching and/or transverse stretching.

The stretching may be performed only by longitudinal stretching (free-end uniaxial stretching) or only by transverse stretching (fixed-end uniaxial stretching). However, the stretching is preferably sequential stretching or simultaneous biaxial stretching with a longitudinal stretching ratio of 1.1 to 3.0 times and a transverse stretching ratio of 1.1 to 3.0 times. In the stretching only by longitudinal stretching (free-end uniaxial stretching) or the stretching only by transverse stretching (fixed-end uniaxial stretching), the film strength increases only in the stretching direction, and the strength does not increase in a direction perpendicular to the stretching direction, so the sufficient film strength may not be obtained in the film as a whole. The longitudinal stretching ratio is preferably 1.2 to 2.5 times, and more preferably 1.3 to 2.0 times. The transverse stretching ratio is preferably 1.2 to 2.5 times, and more preferably 1.4 to 2.0 times. In the case where the longitudinal stretching ratio and the transverse stretching ratio are less than 1.1 times, the stretching ratio is too small and the effect of the stretching may hardly be obtained. When the longitudinal stretching ratio and the transverse stretching ratio exceed 3. 0 times, breakage in stretching is likely to occur due to the problem of smoothness of a film end surface.

The stretching temperature is preferably Tg to (Tg + 30˚C) of a film to be stretched. When the stretching temperature is lower than Tg, a film may be broken. When the stretching temperature exceeds (Tg + 30˚C), a film may start melting which makes it difficult to perform feeding.

The polarizer protective film of the present invention has excellent optical properties, is excellent in mechanical strength, and has enhanced productivity and a reworking property by being stretched by longitudinal stretching and/or transverse stretching.

Regarding the polarizer protective film of the present invention, it is preferred that an in-plane retardation Δnd be 3.0 nm or less, a thickness direction retardation Rth be 10.0 nm or less, and a tearing strength be 2.0 N/mm or more. When the in-plane retardation And, the thickness direction retardation Rth, and the tear strength are in these ranges, both the excellent optical properties and the excellent mechanical strength can be realized.

In the polarizer protective film of the present invention, the in-plane retardation Δnd is preferably as small as possible, and is preferably 2.0 nm or less, more preferably 1.5 nm or less, and still more preferably 1.0 nm or less. When the in-plane retardation Δnd exceeds 3.0 nm, the effect of the present invention, in particular, the excellent optical properties may not be exhibited. The thickness direction retardation Rth is preferably as small as possible, and is preferably 7.0 nm or less, more preferably 5.0 nm or less, and still more preferably 3.0 nm or less. When the thickness direction retardation Rth exceeds 10.0 nm, the effect of the present invention, in particular, the excellent optical properties may not be exhibited.

In the polarizer protective film of the present invention, the photoelastic coefficient with respect to light having a wavelength of 550 nm is preferably $-2 \times 10^{-12}$ to $2 \times 10^{-12}$ $Pa^{-1}$, and more preferably $-1 \times 10^{-12}$ to $1 \times 10^{-12}$ $Pa^{-1}$. When the photoelastic coefficient with respect to light having a wavelength of 550 nm is in the above ranges, the effect

of the present invention, in particular, the excellent optical properties can be exhibited. Note that the photoelastic coefficient with respect to light having a wavelength of 550 nm can be calculated from the gradient of a function of a stress and a retardation value, for example, by measuring a retardation value (23˚C/wavelength 550 nm) at the center of a sample while applying a stress (5 to 15 N) with both ends of the sample (size: 2 cm × 10 cm) pinched, using a spectral elipsometer (M-220 (trade name) manufactured by JASCO Corporation).

The polarizer protective film of the present invention also preferably has excellent mechanical strength. The tensile strength is preferably 65 N/mm$^2$ or more, more preferably 70 N/mm$^2$ or more, and still more preferably 75 N/mm$^2$ or more, and particularly preferably 80 N/mm$^2$ or more in an MD direction, and is preferably 45 N/mm$^2$ or more, more preferably 50 N/mm$^2$ or more, still more preferably 55 N/mm$^2$ or more, and particularly preferably 60 N/mm$^2$ or more in a TD direction. The tensile elongation is preferably 6.5% or more, more preferably 7.0% or more, more preferably 7.5% or more, and particularly preferably 8.0% or more in the MD direction, and is preferably 5.0% or more, more preferably 5.5% or more, still more preferably 6.0% or more, and particularly preferably 6.5% or more in the TD direction. In the case where the tensile strength or tensile elongation is outside of the above ranges, excellent mechanical strength may not be exhibited. The tensile strength or tensile elongation may be measured, for example, in accordance with JIS K 7113.

In the polarizer protective filmof the present invention, moisture permeability is preferably 3 to 100 g/m$^2$·24 hr, and more preferably 5 to 60 g/m$^2$·24 hr. When the moisture permeability exceeds 100 g/m$^2$·24 hr, humidity resistance may be degraded. In the case where the moisture permeability is less than 3 g/m$^2$·24 h, adhesion may be degraded.

In the polarizer protective film of the present invention, a haze representing optical transparency is preferably as low as possible, and is preferably 5% or less, more preferably 3% or less, still more preferably 2% or less, and still more preferably 1.5% or less, and particularly preferably 1% or less. When the haze is 5% or less, a film can be visually provided with satisfactorily clear feeling. Further, when the haze is 1.5% or less, even when the polarizer protective film is used as a lighting member such as a window, both of visibility and a lighting property can be obtained, and even when the polarizer protective film is used as a front plate of a display apparatus, display contents can be visually recognized satisfactorily, so an industrial utility value of such a polarizer protective film is high. In order to decrease a haze, it is effective to decrease the refractive index difference between the acrylic resin and the acrylic elastic particles, for example. Further, the surface roughness also influences a haze as a surface haze, so it is also effective to control the particle diameter and adding amount of the acrylic elastic particles, and decrease the surface roughness in a cooling roll, a calendar roll, a drum, and a belt during film formation, and an application base material during solution casting process.

The thickness of the polarizer protective film of the present invention is preferably 1 to 100 μm, more preferably 5 to 100 μm, and still more preferably 10 to 40 μm. When the thickness of the polarizer protective film is 1 μm or more, the polarizer protective film has appropriate strength and rigidity, and the handling thereof becomes satisfactory during fabrication such as lamination and printing. The retardation occurring due to the stress during take-up can be controlled easily, so a film can be produced stably and easily. When the thickness of the polarizer protective film is 100 μm or less, the take-up of a film becomes easy, and a line speed, productivity, and a control property become satisfactory.

In the polarizer protective film of the present invention, 1% deformation temperature under a high tension is preferably 100 ˚C or more, and more preferably 110˚C or more. The 1% deformation temperature under a high tension as used herein is measured as a temperature when a sample with an initial length of 15 mm and an initial width of 4 mm sampled is elongated in a film lengthwise direction by 1% in the case where the temperature is increased by 20˚C/min from 25˚C under a tension of 1.5 MPa. The case where the 1% deformation temperature under a high tension is low means the tendency of degradation in heat resistance. In the case where the 1% deformation temperature under a high tension is lower than 100˚C, there may arise a problem that the flatness of a film may be degraded during a drying step in coating processing, vapor deposition, and sputtering. The upper limit of the 1% deformation temperature under a high tension is preferably 140˚C or lower for the purpose of obtaining a film with elongation at break of 15% or more.

In order to satisfy the preferred breaking elongation and 1% deformation temperature under a high tension in the polarizer protective film of the present invention, film properties such as the molecular weight of the acrylic resin, the content of a glutaric anyhydride unit, and the glass transition temperature, particle diameter, adding amount, and dispersion state in a film of the acrylic elastic particles may be adjusted appropriately.

In the polarizer protective film of the present invention, the Charpy impact strength in a film lengthwise direction is preferably 60 kJ/m$^2$ or more, and more preferably 90 kJ/m$^2$ or more. By setting the Charpy impact strength to be 60 kJ/m$^2$ or more, a film withstanding a slit at a high speed can be obtained. In order to obtain a polarizer protective film having a large Charpy impact strength, it is effective to increase the average particle diameter of the acrylic elastic particles in a range of not degrading the optical properties.

In the polarizer protective film of the present invention, the total light transmittance is preferably 91% or more, and more preferably 93% or more. Further, the actual upper limit is 99%. In order to achieve the excellent transparency represented by the total light transparency, it is effective to prevent an additive and a copolymer component absorbing visible light from being introduced, and to decrease the refractive index of an acrylic resin.

The polarizer protective film of the present invention may have a hard coat layer at least on one surface. The hard coat layer is provided for the purpose of preventing a scratch. Examples of a hard coat agent forming the hard coat

layer include a thermosetting cross-linking resin containing an organic silicon-based compound, an epoxy resin, a melamine resin, or the like as a main component, and an active energy line-curable cross-linking resin having two or more (meth)acryloyloxy groups in one molecule.

The polarizer protective film of the present invention may have an antireflection film at least on one surface. The antireflection film is provided for the purpose of enhancing a total light transmittance. There are various antireflection films, but the antireflection film preferably includes at least a light absorbing layer, and for example, it is preferred to adopt a configuration including a low refractive index layer, a high refractive index layer, and a light absorbing layer. Examples of the material for the low refractive index layer include $SiO_2$ and $MgF_2$. Examples of the material for the high refractive index layer include $TiO_2$, $ZrO_2$, ITO, $SnO_2$, $Y_2O_3$, and ZnO. An example of the light absorbing layer includes a layer in which a film of $TiN_x$, Au, Ag, $NiO_x$, or the like is interposed as a constituent element for constituting a complex film.

The polarizer protective film of the present invention may be produced by any method. However, it is preferred to mix materials for forming the acrylic resin (for example, a monomer (methyl methacrylate, etc.) forming a structural unit represented by General Formula (1), a monomer (methyl methacrylate, methacrylic acid, etc.) forming a structural unit represented by General Formula (2), unsaturated carboxylate monomer forming the structural unit (A), and other vinyl-based monomers forming the structural unit (B), etc.), the acrylic elastic particles, the additives (UV-absorber, etc.), and the like, to add any suitable solvent (for example, methyl ethyl ketone) to the mixture, and to perform heating and intramolecular cyclization. Preferred examples of the intramolecular cyclization include intramolecular cyclization by dealcoholization and/or dehydration. As a method of heating and intramolecular cyclization, although there is no particular limit, a method of producing a polarizer protective film by allowing the mixture to pass through a heated extruder having a bent, and a method of producing a polarizer protective film in an apparatus capable of degassing by heating in a nitrogen stream or under a vacuum. Although the temperature for degassing by heating by the above method is not particularly limited as long as it is a temperature at which intramolecular cyclization is performed by dealcoholization and/or dehydration, the temperature is preferably in a range of 180 to 300 ˚C, and more preferably 200 to 280 ˚C. Further, although the time for degassing by heating at this time is not particularly limited, and can be set to be any suitable time in accordance with a desired copolymerization composition, it is preferably in the range of 1 to 60 minutes in general. After intramolecular cyclization is performed with heating, the mixture may be formed into a film by extrusion molding (melt extrusion method such as T-die method and inflation method), cast molding (melt casting method, etc.), or calendaring.

The acrylic resin containing a glutaric anhydride unit represented by the General Formula (3) can be produced basically by the following method.

The unsaturated carboxylic acid monomer represented by General Formula (4), the unsaturated alkyl carboxylate monomer represented by General Formula (5), and in the case where other vinyl-based monomer units are contained, vinyl-basedmonomers giving the units are polymerized to obtain a copolymer (a):

[Chemical Formula 6]

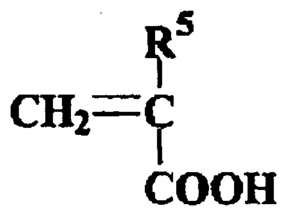
(4)

in General Formula (4), $R^5$ represents hydrogen or an alkyl group containing 1 to 5 carbon atoms; and

[Chemical Formula 7]

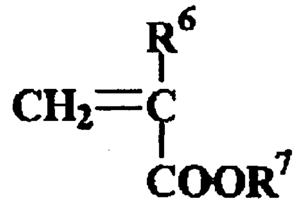

(5)

in General Formula (5), $R^5$ represents hydrogen, or an aliphatic hydrocarbon group containing 1 to 5 carbon atoms or alicyclic hydrocarbon group, and $R^7$ represents an aliphatic hydrocarbon group containing 1 to 5 carbon atoms.

The compounding ratio of the unsaturated carboxylic acid monomer is preferably 15 to 45 wt%, and more preferably 20 to 40 parts by weight, assuming that the total of the compounded monomers is 100 wt%. Further, the compounding ratio of the unsaturated alkyl carboxylate monomer is preferably 55 to 85 wt%, and more preferably 60 to 80 wt%.

By setting the content of the unsaturated carboxylic acid monomer to be 15 to 45 wt%, the content of the glutaric anhydride unit represented by the General Formula (3) falls in a preferred range of 20 to 40 wt% when the copolymer (a) is heated, whereby an acrylic resin excellent in heat resistance, colorless transparency, and retention stability can be obtained.

As a polymerization method of generating the copolymer (a), basically, known polymerization methods such as block polymerization, solution polymerization, suspension polymerization, and emulsion polymerization by radical polymerization can be used. The solution polymerization, block polymerization, and suspension polymerization are particularly preferred because there is a small amount of impurities present.

The polymerization temperature for generating the copolymer (a) is preferably 95˚C or lower, more preferably 85˚C or lower, and still more preferably 75 ˚C or lower, from the viewpoint of preventing a resin from being colored, so as to have a satisfactory color tone. The lower limit of the polymerization temperature is preferably 50˚C or higher, and more preferably 60˚C or higher in terms of the productivity considering the polymerization speed. The polymerization temperature may be increased along with the polymerization for the purpose of enhancing the polymerization yield or the polymerization speed. In this case, it is also preferred to control the upper limit temperature to be 95˚C or lower throughout the step, and it is also preferred that the polymerization is started at a relatively low temperature of 75˚C or lower.

The polymerization time for generating the copolymer (a) is preferably 60 to 360 minutes, and more preferably 90 to 180 minutes in terms of a production efficiency.

Because the molecular weight of the acrylic resin is determined by the molecular weight of the copolymer (a), in order to set the polymerization average molecular weight of the acrylic resin in a preferred range (preferably 1,000 to 2,000,000, and particularly preferably 80,000 to 150,000), the molecular weight of the copolymer (a) is also preferably 1,000 to 2,000,000, and particularly preferably 80,000 to 150,000 in a weight average molecular weight.

The molecular weight of the copolymer (a) can be controlled, for example, by adjusting the adding amount of a radical polymerization initiator such as an azo compound or a peroxide or a chain transfer agent such as alkylmercaptan, carbon tetrachloride, carbon tetrabromide, dimethylacetamide, dimethylformamide, or triethylamine. In particular, a method of adjusting the adding amount of alkylmercaptan that is a chain transfer agent can be adopted preferably, because the method has the stability of polymerization, the ease of handling, and the like.

Examples of the alkylmercaptan include n-octylmercaptan, t-dodecylmercaptan, n-dodecylmercaptan, n-tetradecylmercaptan, and n-octadecylmercaptan. Of those, t-dodecylmercaptan, and n-dodecylmercaptan are used preferably.

The adding amount of the alkylmercaptan is preferably 0.2 to 5.0 parts by weight, more preferably 0.3 to 4.0 parts by weight, and still more preferably 0.4 to 3.0 parts by weight with respect to 100 parts by weight of the total monomers used for production of the copolymer (a).

When the copolymer (a) is heated in the presence or absence of an appropriate catalyst, carboxyl groups of 2 unsaturated carboxylic acid units adjacent to each other in the copolymer (a) are dehydrated, or alcohol is eliminated from unsaturated carboxylic acid unit and unsaturated alkyl carboxylate unit adjacent to each other, whereby one glutaric anhydride unit is generated.

As a method of dehydrating and/or dealcoholizing the copolymer (a) by heating, i.e., a method of allowing an intramolecular cyclization reaction to be performed, for example, a method of using a heated extruder having a bent

and a method using an apparatus capable of performing devolatization by heating under an inactive gas atmosphere or a vacuum is preferred in terms of productivity.

As a specific apparatus for allowing the intramolecular cyclization reaction to be performed, for example, a monoaxial extruder, biaxial extruder, or triaxial extruder provided with a screw of a "unimelt" type, or a kneader of a continuous or batch kneader type can be used. Of those, the use of the biaxial extruder is preferred from the viewpoint of the continuous productivity, the ease of control of the temperature, time, and shearing speed during a reaction, and quality stability.

The length/diameter ratio (L/D) of the screw of the extruder is preferably 40 or more. By setting the L/D to be 40 or more, the heating time for allowing a sufficient intramolecular cyclization reaction to proceed can be maintained. By using an extruder with an L/D of 40 or more, the remaining amount of an unreacted unsaturated carboxylic acid unit can be reduced, whereby a polymer with less generation of air bubbles in a formed product caused when the reaction proceeds again during formation by heating can be obtained, which can suppress the degradation of a color tone during formation retention.

As a specific apparatus for allowing the intramolecular cyclization reaction to be performed, an apparatus capable of introducing inactive gas such as nitrogen is preferred. This is because when the intramolecular cyclization reaction is performed by heating in the presence of oxygen, yellow color tends to increase, so it is preferred to replace the system by inactive gas such as nitrogen sufficiently. For example, as a method of introducing inactive gas such as nitrogen into a biaxial extruder, there is a method of connecting a piping to an upper portion and/or a lower portion of a hopper, and flowing inactive gas at about 10 to 100 L/min.

The temperature for heating for the intramolecular cyclization reaction is preferably 180 to 300˚C, and more preferably 200 to 280˚C in terms of the smooth progress of the reaction.

The time for heating for the intramolecular cyclization reaction may be appropriately set in accordance with a desired copolymer composition, but it is preferably 1 to 60 minutes, more preferably 2 to 30 minutes, and still more preferably 3 to 20 minutes.

During heating for the intramolecular cyclization reaction, it is also preferred to add at least one kind of an acid catalyst, an alkaline catalyst, and asalt-based catalyst. Examples of the acid catalyst include hydrochloric acid, sulfuric acid, p-toluene sulfonic acid, phosphoric acid, phosphorous acid, phenylphosphonic acid, and methyl phosphate. Examples of the basic catalyst include a metal hydroxide, amines, imines, alkaline metal derivatives, and alkoxides. Examples of the salt-based catalyst include a metal acetate, a metal stearate, a metal carbonate, and an ammonium hydroxide. Of those, a basic catalyst or a salt-based catalyst containing alkaline metal can be preferably used because it exhibits an excellent effect in promoting a reaction with a relatively small adding amount. Specific examples thereof include: alkaline metal hydroxides such as lithium hydroxide, sodium hydroxide, and potassium hydroxide; alkoxide compounds such as sodium methoxide, sodium ethoxide, sodium phenoxide, potassium methoxide, potassium ethoxide, and potassium phenoxide; and organic carboxylates such as lithium acetate, sodium acetate, potassium acetate, and sodium stearate. Of those, sodium hydroxide, sodium methoxide, lithiumacetate, and sodium acetate can be used preferably. Some salt-based catalysts become acid or basic by being formed into an aqueous solution, they are dealt with as a salt-based catalyst and distinguished from an acid catalyst and an alkaline catalyst. These catalysts may be used alone or in combination.

The adding amount of the catalyst is preferably 0.01 to 1 part by weight with respect to 100 parts by weight of the copolymer (a) . By setting the adding amount of the catalyst to be 0.01 part by weight or more, the actual effect as the catalyst can be obtained. By setting the adding amount of the catalyst to be 1 part by weight or less, the color peculiar to the catalyst can be prevented from adversely influencing the coloring of a thermoplastic polymer and prevent the transparency from being decreased.

When the acrylic elastic particles are dispersed in the acrylic resin or the precursor thereof, the acrylic elastic particles are preferably in a state in which a surface layer thereof is laminated with an acrylic resin having a glass transition temperature of 60˚C or more, or in a state in which a vinyl-based monomer is graft-copolymerized. Thus, the adhesion and cohesion between the acrylic elastic particles are prevented, and the handling thereof and the dispersibility thereof in the acrylic resin are enhanced.

In the acrylic elastic particles in which an acrylic resin having a glass transition temperature of 60˚C or more is laminated on a surface layer (hereinafter, which may be referred to as "core-shell type"), the "acrylic resin having a glass transition temperature of 60˚C or more" forming the shell portion preferably contains an unsaturated alkyl carboxylate-based unit and an unsaturated carboxylic acid-based unit. The core-shell type acrylic elastic particles containing the units in the shell portion have satisfactory affinity with respect to the matrix resin when added to the copolymer (a) and heated, and thus, have enhanced dispersibility. Further, the intramolecular cyclization reaction proceeds even in the shell portion, and the shell portion and the matrix resin are integrated, so the transparency of the polarizer protective film of the present invention can be prevented from being impaired by the shell portion. Further, the acrylic elastic particles are held strongly in the matrix resin, so mechanical properties such as shock resistance are enhanced.

As a monomer to be a material for the unsaturated alkyl carboxylate-based unit, an alkyl (meth) acrylate is

preferably used, and methyl (meth)acrylate is more preferably used.

As a monomer to be a material for the unsaturated carboxylic acid-based unit, (meth) acrylic acid is preferably used, and methacrylic acid is more preferably used.

Regarding the weight ratio between the core and the shell in the core-shell type acrylic elastic particles, the core is preferably 50 to 90 wt%, and more preferably 60 to 80 wt% with respect to the total of the core and the shell.

Examples of the commercially available product of the core-shell type acrylic elastic particles include "Metablen" manufactured by Mitsubishi Rayon Co., Ltd., "Kaneace" manufactured by Kaneka Corporation, "Pararoid" manufactured by Kureha Chemical Industry Co. , Ltd. , "Acryloid" manufactured by Rohm and Haas Company, "Staphyroid" manufactured by Ganz Chemical Co., Ltd., and "Parapet SA" manufactured by Kurary Co., Ltd. They may be used alone or in combination.

In the acrylic elastic particles in which a vinyl-based monomer is graft-copolymerized (hereinafter, which may be referred to as "graft copolymerization type"), as the vinyl-based monomer, an unsaturated carboxylate-based monomer having a vinyl group, an unsaturated carboxylic acid-based monomer having a vinyl group, an aromatic vinyl-basedmonomer, or the like can be adopted. Further, in accordance with the affinity with the rubber polymer and the matrix resin contained in the acrylic elastic particles, another vinyl-based monomer may be copolymerized.

Regarding the amount of the vinyl-based monomer provided to the acrylic elastic particles, the weight ratio between the rubber polymer and the vinyl-based monomer is preferably (10 to 80) : (20 to 90), more preferably (20 to 70) : (30 to 80), and still more preferably (30 to 60) : (40 to 70) . By setting the vinyl-basedmonomer to be 20 wt% or more, the actual effect of the present embodiment can be obtained. On the other hand, by setting the vinyl-based monomer to be 90 wt% or less, the impact strength can be prevented from decreasing.

The graft copolymerization type acrylic elastic particles may contain a component derived from a vinyl-based monomer that is not graft copolymerized, but a graft ratio is preferably 10 to 100% in terms of the shock strength. Herein, the graft ratio is a weight ratio of a graft-copolymerized vinyl-based monomer in the vinyl-based monomer provided to the rubber polymer. Further, there is no particular limit to the limit viscosity of a methyl ethyl ketone solvent of a copolymer that is not grafted measured at 30 ˚C, but 0.1 to 0.6 dl/g is preferred in terms of the balance between the shock strength and the formation processing.

As a method of forming the acrylic elastic particles into a graft copolymerization type, a polymerization method such as block polymerization, solution polymerization, suspension polymerization, and emulsion polymerization can be adopted.

The particle diameter, the content, and the refractive index of the core-shell type or graft copolymerization type acrylic elastic particles are evaluated with respect to a rubber polymer excluding a shell portion and a graft copolymer portion. The particle diameter can be evaluated, for example, by observation of a cross-section with a transmission-type electronic microscope, excluding a shell portion and a graft copolymerized portion. Further, the content can be evaluated from an insoluble component after an acrylic resin is dissolved in a solvent such as acetone.

As a method of compounding acrylic elastic particles and other additives with the acrylic resin or a precursor thereof, for example, a method of previously blending the acrylic resin with the other adding components, and melt-kneading the mixture uniformly with a uniaxial or biaxial extruder generally at 200 to 350˚C.

Further, the acrylic elastic particles (B) and the other additives can be compounded by melt-kneading while the acrylic elastic particles and other additives are added to the copolymer (a) that is a precursor of an acrylic resin, and the intramolecular cyclization reaction with a biaxial extruder or the like is performed.

In the melt-kneading, the cyclization reaction of an unsaturated carboxylic acid monomer unit and an unsaturated alkyl carboxylate monomer unit in the shell portion or the like provided to the acrylic elastic particles can be performed simultaneously.

In the case of a solution casting process described later, a method of removing a solvent after mixing an acrylic resin and an acrylic elastic particle component in a solvent in which they are to be dissolved or dispersed.

In particular, in the solution casting process, it is preferred that the resin forming the polarizer protective film of the present invention be filtered for the purpose of removing foreign matters. By removing the foreign matters, the coloring of the resin can be prevented, and the resultant polarizer protective film can be used effectively as an optical application film. The resin dissolved in a solvent such as tetrahydrofuran, acetone, methyl ethyl ketone, dimethyl formamide, dimethyl sulfoxide, N-methyl pyrrolidone, and the like can be filtered through a filter of sintered metal, porous ceramic, sand, and a wire net preferably at a temperature of 25˚C or higher and 100˚C or lower.

The polarizer protective film of the present invention can be produced by melt casting process or solution casting process. As melt casting process, there are an inflation method, a T-die method, a calendar method, a cutting method, and the like, and in particular, the T-die method is preferably adopted. As solution casting process, there are a casting on a polymer film method, a casting drum method, a casting on a metal belt method, and the like. In particular, a casting on a polymer film method can be adopted preferably. Hereinafter, each production method will be exemplified.

For melt casting process, an extruder type melt-extruding apparatus with a monoaxial or biaxial extrusion screw can be used. The L/D of the screw is preferably set to be 25 to 120 in order to prevent coloring. The melt-extrusion

temperature for producing the polarizer protective film of the present invention is preferably 150 to 350°C, and more preferably 200 to 300°C. It is preferred that the solution shearing rate is 1,000 $s^{-1}$ to 5,000 $s^{-1}$. Further, in the case of performing melt-kneading using a melt-extruding apparatus, it is preferred to perform melt-kneading under a reduced pressure using a bent or under a nitrogen stream, in terms of the suppression of coloring.

According to the T-die method, a melt resin is measured with a gear pump, discharged from a T-die base, brought into contact with a cooling medium such as a drum or the like by an electrostatic application method, an air chamber method, an air knife method, a press roll method, or the like, and solidified by cooling, whereby a film can be obtained. In particular, in order to obtain a film with less thickness deviation and a low haze, the press roll method is preferred.

According to solution casting process, preferably, a matrix resin is dissolved with a solvent. As the solvent, tetrahydrofuran, acetone, methyl ethyl ketone, dimethyl formamide, dimethyl sulfoxide, N-methyl pyrrolidone, or the like can be used. In particular, acetone or methyl ethyl ketone can be adopted preferably.

According to the casting on a polymer film method, a solution in which a resin composition as a material is dissolved is casted onto a heat-resistant film of polyethylene terephthalate with a bar coater, a die coater, or the like, and the solvent is removed by evaporation (dry method) or the solution is solidified with a coagulating solution (wet method).

The low-refractive index layer, the high-refractive index layer, the light absorbing layer, and the like forming the antireflection film can be formed using a vacuum thin film formation technology such as vapor deposition or sputtering.

The polarizer protective film of the present invention can be used by being laminated on another base material. For example, the polarizer protective film of the present invention can also be laminated on a base material of glass, a polyolefin resin, an ethylene vinylidene copolymer to be a high barrier layer, or polyester by multi-layered extrusion or multi-layered inflation with an adhesive resin layer. In the case where a heat fusion property is high, an adhesive layer may be omitted.

(Polarizing plate)

The polarizing plate of the present invention includes the polarizer protective film of the present invention at least on one surface of a polarizer formed of a polyvinyl alcohol-based resin.

The polarizing plate of the present invention includes the polarizer protective film of the present invention at least on one surface of a polarizer formed of a polyvinyl alcohol-based resin, and the polarization degree change ratio defined by the following Expression (A) after retention under 60°C/95% RH for 492 hours is -0.5 to 0.0%.

$$\text{Polarization degree change ratio (\%)} = \{(P_t - P_0)/P_0\} \times 100 \quad \text{(A)}$$

$P_0$: initial polarization degree
$P_t$: polarization degree after t hour(s)

The polarization degree change ratio is preferably-0. 45 to 0.00%, more preferably -0.40 to 0.00%, still more preferably -0.35 to 0.00%, and particularly preferably -0.30 to 0.00%.

When the polymerization degree change ratio is -0.5 to 0.0%, a polarizing plate excellent in heating and humidification durability can be obtained. The polarizing plate excellent in heating and humidification durability can be provided by using the polarizer protective film of the present invention.

The polarizing plate of the present invention includes the polarizer protective film of the present invention at least on one surface of a polarizer formed of a polyvinyl alcohol-based resin, and the transmittance change ratio defined by the following Expression (B) after retention under 60°C/95% RH for 492 hours is 0.0 to 2.5%.

$$\text{Transmittance change ratio (\%)} = \{(Y_t - Y_0)/Y_0\} \times 100 \quad \text{(B)}$$

$Y_0$: initial transmittance
$Y_t$: transmittance after t hour(s)

The transmittance change ratio is preferably 0.0 to 2.3%, more preferably 0.0 to 2.1%, and still more preferably 0.0 to 2.0%.

When the transmittance change ratio is 0.0 to 2.5%, a polarizing plate excellent in heating and humidification

durability can be obtained. The polarizing plate excellent in heating and humidification durability can be provided by using the polarizer protective film of the present invention.

The polarizing plate of the present invention includes the polarizer protective film of the present invention at least on one surface of a polarizer formed of a polyvinyl alcohol-based resin, and the Rth change ratio defined by the following Expression (C) after retention under 80°C for 48 hours is -2.0 to 0.0%.

$$\text{Rth change ratio (\%)} = \{(Rth_t - Rth_0)/Rth_0\} \times 100 \quad (C)$$

$Rth_0$: initial Rth
$Rth_t$: Rth after t hour(s)

The Rth change ratio is preferably -1.5 to 0.0%, more preferably -1.2 to 0.0%, and still more preferably -1.0 to 0.0%.

When the Rth change ratio is -2.0 to 0.0%, a polarizing plate excellent in heating durability can be obtained. The polarizing plate excellent in heating durability can be provided by using the polarizer protective film of the present invention.

The polarizing plate of the present invention includes the polarizer protective film of the present invention at least on one surface of a polarizer formed of a polyvinyl alcohol-based resin, and the Rth change ratio defined by the following Expression (D) after retention under 60°C/90% RH for 48 hours is -2.5 to 0.0%.

$$\text{Rth change ratio (\%)} = \{(Rth_t - Rth_0)/Rth_0\} \times 100 \quad (D)$$

$Rth_0$: initial Rth
$Rth_t$: Rth after t hour(s)

The Rth change ratio is preferably -2.3 to 0.0%, more preferably -2.2 to 0.0%, and still more preferably -2.1 to 0.0%.

When the Rth change ratio is -2.5 to 0. 0%, a polarizing plate excellent in heating and humidification durability can be obtained. The polarizing plate excellent in heating and humidification durability can be provided by using the polarizer protective film of the present invention.

According to one preferred embodiment, the polarizing plate has the polarizer protective filmon one surface of the polarizer, and has a cellulose-based resin film on the other surface. According to one preferred embodiment, the polarizing plate has the polarizer protective films on both surfaces of the polarizer.

According to one preferred embodiment of the polarizing plate of the present invention, as shown in FIG. **1,** one surface of a polarizer **31** is bonded to a polarizer protective film **34** of the present invention via an adhesive layer **32** and an easy-adhesion layer **33,** and the other surface of the polarizer **31** is bonded to the polarizer protective film **36** via an adhesive layer **35.** The polarizer protective film **36** may be the polarizer protective film of the present invention, or may be another suitable polarizer protective film.

The polarizer formed of a polyvinyl alcohol-based resin is generally produced by coloring a polyvinyl alcohol-based resin film with a dichromatic substance (typically, iodine or a dichromatic dye) and uniaxially stretching the film. The degree of polymerization of the polyvinyl alcohol-based resin for forming the polyvinyl alcohol-based resin film is preferably 100 to 5,000, and more preferably 1,400 to 4,000. The polyvinyl alcohol-based resin film for forming the polarizer may be formed by any appropriate method (such as a flow casting method involving film formation through flow casting of a solution containing a resin dissolved in water or an organic solvent, a casting method, or an extrusion method) . The thickness of the polarizer may appropriately be set in accordance with the purpose and application of LCD employing the polarizing plate, but is typically 5 to 80 μm.

For producing a polarizer, any appropriate method may be employed in accordance with the purpose, materials to be used, conditions, and the like. Typically, employed is a method in which the polyvinyl alcohol-based resin film is subjected to a series of production steps including swelling, coloring, cross-linking, stretching, water washing, anddryingsteps. In each of the treatment steps excluding the drying step, the polyvinyl alcohol-based resin film is immersed in a bath containing a solution to be used in each step. The order, number of times, and absence or presence of swelling, coloring, cross-linking, stretching, water washing, and drying steps may appropriately be set in accordance with the purpose, materials tobeused, conditions, and the like. For example, several treatments may be conducted at the same time in one step, or specific treatments may be omitted. More specifically, stretching treatment, for example, may be conducted after coloring treatment, before coloring treatment, or at the same time as swelling treatment, coloring treatment, and cross-linking treatment. Further, for example, cross-linking treatment is preferably conducted before and after

stretching treatment. Further, for example, water washing treatment may be conducted after each treatment or only after specific treatments.

The swelling step is typically conducted by immersing the polyvinyl alcohol-based resin film in a treatment bath (swelling bath) filled with water. This treatment allows washing away of contaminants from a surface of the polyvinyl alcohol-based resin film, washing away of an anti-blocking agent, and swelling of the polyvinyl alcohol-based resin film, to thereby prevent non-uniformity such as uneven coloring or the like. The swelling bath may appropriately contain glycerin, potassium iodide, or the like. The temperature of the swelling bath is typically about 20 to 60 ˚C, and the immersion time in the swelling bath is typically about 0.1 to 10 minutes.

The coloring step is typically conducted by immersing the polyvinyl alcohol-based resin film in a treatment bath (coloring bath) containing a dichromatic substance such as iodine. As a solvent to be used for a solution of the coloring bath, water is generally used, but an appropriate amount of an organic solvent having compatibility with water may be added. The dichromatic substance is typically used in a ratio of 0. 1 to 1. 0 part by weight with respect to 100 parts by weight of the solvent. In the case where iodine is used as a dichromatic substance, the solution of the coloring bath preferably further contains an assistant such as an iodide for improving a coloring efficiency. The assistant is used in a ratio of preferably 0.02 to 20 parts by weight, and more preferably 2 to 10 parts by weight with respect to 100 parts by weight of the solvent. Specific examples of the iodide include potassium iodide, lithium iodide, sodium iodide, zinc iodide, aluminum iodide, lead iodide, copper iodide, barium iodide, calcium iodide, tin iodide, and titanium iodide. The temperature of the coloring bath is typically about 20 to 70˚C, and the immersion time in the coloring bath is typically about 1 to 20 minutes.

The cross-linking step is typically conducted by immersing the polyvinyl alcohol-based resin film that has undergone the coloring treatment in a treatment bath (cross-linking bath) containing a cross-linking agent. The cross-linking agent employed may be any appropriate cross-linking agent. Specific examples of the cross-linking agent include: a boron compound such as boric acid or borax; glyoxal; and glutaraldehyde. The cross-linking agents may be used alone or in combination. As a solvent to be used for a solution of the cross-linking bath, water is generally used, but an appropriate amount of an organic solvent having compatibility with water may be added. The cross-linking agent is typically used in a ratio of 1 to 10 parts by weight with respect to 100 parts by weight of the solvent. In the case where a concentration of the cross-linking agent is less than 1 part by weight, sufficient optical properties are often not obtained. In the case where the concentration of the cross-linking agent is more than 10 parts by weight, stretching force to be generated on the film during stretching increases and a polarizing plate to be obtained may shrink. The solution of the cross-linking bath preferably further contains an assistant such as an iodide for obtaining uniform properties in the same plane. The concentration of the assistant is preferably 0.05 to 15 wt%, and more preferably 0.5 to 8 wt%. Specific examples of the iodide are the same as in the case with the coloring step. The temperature of the cross-linking bath is typically about 20 to 70˚C, and preferably 40 to 60˚C. The immersion time in the cross-linking bath is typically about 1 second to 15 minutes, and preferably 5 seconds to 10 minutes.

The stretching step may be conducted at any stage as described above. Specifically, the stretching step may be conducted after the coloring treatment, before the coloring treatment, at the same time as the swelling treatment, the coloring treatment, and the cross-linking treatment, or after the cross-linking treatment. A cumulative stretching ratio of the polyvinyl alcohol-based resin film must be 5 times or more, preferably 5 to 7 times, and more preferably 5 to 6.5 times. In the case where the cumulative stretching ratio is less than 5 times, a polarizing plate having a high polarization degree may be hard to obtain. In the case where the cumulative stretching ratio is more than 7 times, the polyvinyl alcohol-based resin film (polarizer) may easily break. A specific method of stretching employed may be any appropriate method. For example, in the case where a wet stretching method is employed, a polyvinyl alcohol-based resin film is stretched in a treatment bath (stretching bath) to a predetermined ratio. A solution of the stretching bath to be preferably used is a solution in which various metal salts or compounds of iodine, boron, or zinc are added to a solvent such as water or an organic solvent (such as ethanol).

The water washing step is typically conducted by immersing in a treatment bath (water washing bath) the polyvinyl alcohol-based resin film that has undergone the various treatments. The water washing step allows washing away of unnecessary remains from the polyvinyl alcohol-based resin film. The water washing bath may contain pure water or an aqueous solution containing iodide (such as potassium iodide or sodium iodide). The concentration of an aqueous iodide solution is preferably 0 . 1 to 10 mass%. The aqueous iodide solution may contain an assistant such as zinc sulfate or zinc chloride. The temperature of the water washing bath is preferably 10 to 60˚C, and more preferably 30 to 40˚C, and the immersion time is typically 1 second to 1 minute. The water washing step may be conducted only once, or may be conducted a plurality of times as required. In the case where the water washing step is conducted a plurality of times, the kind and concentration of the additive contained in the water washing bath to be used for each treatment may appropriately be adjusted. For example, the water washing step includes a step of immersing a polymer film in an aqueous potassium iodide solution (0.1 to 10 mass%, 10 to 60˚C) and a step of washing the polymer film with pure water.

The drying step may employ any appropriate drying method (such as natural drying, air drying, or heat drying) .

For example, in heat drying, a drying temperature is typically 20 to 80˚C, and a drying time is typically 1 to 10 minutes. In such a manner as described above, the polarizer is obtained.

The polarizing plate of the present invention includes the polarizer and the polarizer protective film of the present invention, and it is preferred that an easy-adhesion layer and an adhesive layer be formed between the polarizer protective film and the polarizer.

It is preferred that the adhesive layer be formed of a polyvinyl alcohol-based adhesive. The polyvinyl alcohol-based adhesive contains a polyvinyl alcohol-based resin and a cross-linking agent.

Examples of the polyvinyl alcohol-based resin include, without particular limitation: a polyvinyl alcohol obtained by saponifying polyvinylacetate; its derivatives; a saponified product of a copolymer obtained by copolymerizing vinyl acetate with amonomer having copolymerizability with vinyl acetate; and a modified polyvinyl alcohol obtained by modifying polyvinyl alcohol to acetal, urethane, ether, graft, phosphate, or the like. Examples of the monomer include: unsaturated carboxylic acids such as maleic anhydride or maleic acid, fumaric acid, crotonic acid, itaconic acid, and (meth)acrylic acid and esters thereof; $\alpha$-olefins such as ethylene and propylene; (sodium) (meth)allylsulfonate; sodium sulfonate (monoalkylmalate); sodium disulfonate alkylmalate; N-methylol acrylamide; alkali salts of acrylamide alkylsulfonate; N-vinylpyrrolidone; and derivatives of N-vinylpyrrolidone. The polyvinyl alcohol-based resins may be used alone or in combination.

The polyvinyl alcohol-based resin has an average degree of polymerization of preferably 100 to 3,000, and more preferably 500 to 3,000 from the viewpoint of adhesion, and an average degree of saponification of preferably 85 to 100 mol%, and more preferably 90 to 100 mol%.

A polyvinyl alcohol-based resin having an acetoacetyl group may be used as the polyvinyl alcohol-based resin. The polyvinyl alcohol-based resin having an acetoacetyl group is a polyvinyl alcohol-based adhesive having a highly reactive functional group and is preferred from the viewpoint of improving durability of a polarizing plate.

The polyvinyl alcohol-based resin having an acetoacetyl group is obtained in a reaction between the polyvinyl alcohol-based resin and diketene through a known method. Examples of the known method include: a method involving dispersing the polyvinyl alcohol-based resin in a solvent such as acetic acid, and adding diketene thereto; and a method involving dissolving the polyvinyl alcohol-based resin in a solvent such as dimethylformamide or dioxane in advance, and adding diketene thereto. Another example of the known method is a method involving directly bringing diketene gas or a liquid diketene into contact with polyvinyl alcohol.

A degree of acetoacetyl modification of the polyvinyl alcohol-based resin having an acetoacetyl group is not particularly limited as long as it is 0.1 mol% or more. A degree of acetoacetyl modification of less than 0.1 mol% provides insufficient water resistance with the adhesive layer and is inappropriate. The degree of acetoacetyl modification is preferably 0.1 to 40 mol%, and more preferably 1 to 20 mol%. A degree of acetoacetyl modification of more than 40 mol% decreases the number of reaction sites with a cross-linking agent and provides a small effect of improving the water resistance. The degree of acetoacetyl modification is a value measured by NMR.

As the cross-linking agent, those which are used in a polyvinyl alcohol-based adhesive can be used without any particular limit.

A compound having at least two functional groups each having reactivity with a polyvinyl alcohol-based resin can be used as the cross-linking agent. Examples of the compound include: alkylene diamines having an alkylene group and two amino groups, such as ethylene diamine, triethylene diamine, and hexamethylene dimamine (of those, hexamethylene diamine is preferred); isocyanates such as tolylene diisocyanate, hydrogenated tolylene diisocyanate, a trimethylene propane tolylene diisocyanate adduct, triphenylmethane triisocyanate, methylene bis(4-phenylmethanetriisocyanate), isophorone diisocyanate, and ketoxime blocked compounds or phenol blocked compounds thereof; epoxies such as ethylene glycol diglycidyl ether, polyethylene glycol diglycidyl ether, glycerin di- or triglycidyl ether, 1, 6-hexane diol diglycidyl ether, trimethylol propane triglycidyl ether, diglycidyl aniline, and diglycidyl amine; monoaldehydes such as formaldehyde, acetaldehyde, propione aldehyde, and butyl aldehyde; dialdehydes such as glyoxal, malondialdehyde, succinedialdehyde, glutardialdehyde, maleic dialdehyde, and phthaldialdehyde; an amino-formaldehyde resin such as a condensate of formaldehyde with methylol urea, methylol melamine, alkylated methylol urea, alkylated methylol melamine, acetoguanamine, or benzoguanamine; and sodium, potassium, divalent metals such as magnesium, calcium, aluminum, iron, and nickel or salts of trivalent metals and oxides thereof. A melamine-based cross-linking agent is preferred as the cross-linking agent, and methylolmelamine is particularly preferred.

A mixing amount of the cross-linking agent is preferably 0.1 to 35 parts by weight, and more preferably 10 to 25 parts by weight with respect to 100 parts by weight of the polyvinyl alcohol-based resin. On the other hand, for improving the durability, the cross-linking agent may be mixed within a range of more than 30 parts by weight and 46 parts by weight or less with respect to 100 parts by weight of the polyvinyl alcohol-based resin. In particular, in the case where the polyvinyl alcohol-based resin having an acetoacetyl group is used, the cross-linking agent is preferably used in an amount of more than 30 parts by weight. The cross-linking agent is mixed within a range of more than 30 parts by weight and 46 parts by weight or less, to thereby improve the water resistance.

In the polyvinyl alcohol-based adhesive, coupling agents such as a silane coupling agent and a titanium coupling

agent, various kinds of tackifiers, a UV-absorber, an antioxidant, stabilizers such as a heat-resistant stabilizer and a hydrolysis-resistant stabilizer, and the like can also be compounded.

The surface of the polarizer protective film of the present invention, which comes into contact with a polarizer, can be subjected to easy-adhesion treatment for enhancing the adhesion. Examples of the easy-adhesion treatment include surface treatments such as corona treatment, plasma treatment, low-pressure UV treatment, and saponification treatment. It is preferred that an easy-adhesion layer (anchor layer) be formed after the easy-adhesion treatment.

An example of the easy-adhesion layer includes a silicone layer having a reactive functional group. Examples of the material for the silicone layer having a reactive functional group are not limited to, but preferably include alkoxysilanols containing an isocyanate group, alkoxysinaols containing an amino group, alkoxysilanols containing a mercapto group, alkoxysilanols containing carboxyl group, alkoxysilanols containing an epoxy group, alkoxysilanols containing a vinyl-type unsaturation group, alkoxysilanols containing a halogen group, and alkoxysilanols containing an isocyanate group, and amino-based silanol is preferred. The adhesive strength can be increased by adding a titanium-based catalyst and a tin-based catalyst for allowing the silanol to react efficiently. Further, another additive may be added to the silicone having a reactive functional group. Specific examples include tackifiers such as a terpene resin, a phenol resin, a terpene-phenol resin, a rosin resin, and a xylene resin, a UV-absorber, an antioxidant, a heat-resistant stabilizer.

The silicone layer having a reactive functional group is formed by coating and drying in accordance with a known technology. The thickness of the silicone layer after drying is preferably 1 to 300 nm, more preferably 1 to 100 nm, still more preferably 1 to 80 nm, and particularly preferably 5 to 70 nm. During coating, silicone having a reactive functional group may be diluted with a solvent. Examples of the dilution solvent are not particularly limited, and include alcohols. The dilution concentration is not particularly limited, but is preferably 1 to 5 wt %, andmorepreferably 1 to 3 wt%.

The adhesive layer is formed by applying the adhesive onto one side of the polarizer protective film or both sides thereof, one side of the polarizer or both sides thereof. After the polarizer protective film and the polarizer are attached to each other, a drying step is performed, thereby an adhesive layer made of an applied dry layer is formed. They can be attached to each other after the adhesive layer is formed. The attachment of the polarizer and polarizer protective film can be performed with a roll laminator or the like. The temperature for heat drying and the drying time are appropriately determined depending upon the kind of an adhesive.

When the thickness of the adhesive layer after drying is too large, it is not preferred in view of the adhesion of the polarizer protective film. Therefore, the thickness of the adhesive layer is preferably 0.1 to 50 nm, more preferably 1 to 50 nm, and still more preferably 5 to 40 nm.

The polarizer protective film is attached to the polarizer by bonding one side of the polarizer protective film to both surfaces of the polarizer.

Further, the polarizer can be attached to the polarizer protective film by bonding one side of the polarizer protective film to one surface of the polarizer, and attaching a cellulose-based resin film to the other surface of the polarizer.

The cellulose-based resin film is not particularly limited. However, triacetyl cellulose is preferred in terms of transparency and an adhesion. The thickness of the cellulose-based resin is preferably 30 to 100 μm, and more preferably 40 to 80 μm. When the thickness is smaller than 30 μm, the film strength decreases to degrade workability, and when the thickness is larger than 100 μm, the light transmittance decreases remarkably in terms of durability.

The polarizing plate according to the present invention may have a pressure-sensitive adhesive layer as at least one of an outermost layer (such a polarizing plate may be referred to as pressure-sensitive adhesion type polarizing plate). As a particularly preferred embodiment, a pressure-sensitive adhesive layer for bonding of other members such as another optical film and a liquid crystal cell can be provided to a side of the polarizer where the polarizer protective film is not bonded.

The pressure-sensitive adhesive forming the pressure-sensitive adhesive layer is not particularly limited. However, for example, a pressure-sensitive adhesive containing as a base polymer an acrylic polymer, a silicone-based polymer, polyester, polyurethane, polyamide, polyether, a fluorine-based or rubber-based polymer can be appropriately selected to be used. In particular, a pressure-sensitive adhesive such as an acrylic pressure-sensitive adhesive is preferably used, which is excellent in optical transparency, exhibits appropriate wettability and pressure-sensitive adhesion of a cohesive property and an adhesion, and is excellent in weather resistance and heat resistance. In particular, an acrylic pressure-sensitive adhesive made of an acrylic polymer containing 4 to 12 carbon atoms is preferred.

In addition to the above, in terms of the prevention of a foaming phenomenon and a peeling phenomenon caused by moisture absorption, the prevention of a degradation in optical properties and bending of a liquid crystal cell caused by thermal expansion difference or the like, and the formation property of a liquid crystal display apparatus which is of high quality and has excellent durability, a pressure-sensitive adhesive layer having a low moisture absorbing ratio and excellent heat resistance is preferred.

The pressure-sensitive adhesive layer may contain, for example, additives to be added to the pressure-sensitive adhesive layer, such as resins of a natural substance or a synthetic substance, in particular, a tackifying resin, a filler such as glass fibers, glass beads, metal powder, or other inorganic powders, a pigment, a colorant, and an antioxidant. A pressure-sensitive adhesive layer that contains fine particles and exhibits a light diffusion property may be used.

The pressure-sensitive adhesive layer can be provided by any appropriate method. Examples thereof include a method of preparing a pressure-sensitive adhesive solution in an amount of about 10 to 40 wt% in which a base polymer or a composition thereof is dissolved or dispersed in any appropriate single solvent such as toluene or ethyl acetate or a solvent made of a mixture, and directly applying the pressure-sensitive adhesive solution onto a polarizing plate or an optical film by any appropriate development method such as a flow casting method or a coating method, or forming a pressure-sensitive adhesive layer on a separator according to the above, and moving the pressure-sensitive adhesive layer to the polarizer protective film surface.

The pressure-sensitive adhesive layer may also be provided on one surface or both surfaces of a polarizing plate as superimposed layers of different compositions, different kinds, or the like. In the case of providing the pressure-sensitive adhesive layer on both surfaces of the polarizing plate, pressure-sensitive adhesive layers on front and reverse surfaces of the polarizing plate can have different compositions, kinds, thicknesses, and the like.

The thickness of the pressure-sensitive adhesive layer can be determined appropriately in accordance with the use purpose and the adhesive strength, and is preferably 1 to 40 μm, more preferably 5 to 30 μm, and particularly preferably 10 to 25 μm. When the thickness of the pressure-sensitive adhesive layer is smaller than 1 μm, durability of the layer degrades. When the thickness of the pressure-sensitive adhesive layer is larger than 40 μm, floats and peeling are likely to occur due to foaming or the like, resulting in an unsatisfactory external appearance.

In order to enhance the adhesiveness between the polarizer protective film and the pressure-sensitive adhesive layer, an anchor layer can also be provided therebetween.

As the anchor layer, preferably, an anchor layer selected from polyurethane, polyester, and polymers containing amino groups in molecules is used, and in particular, polymers containing amino groups in molecules are used preferably. In the polymer containing an amino group in molecules, an amino group in the molecules reacts with a carboxyl group in the pressure-sensitive adhesive or a polar group in a conductive polymer, or exhibits an interaction such as an ion interaction, so satisfactory adhesiveness is ensured.

Examples of the polymers containing amino groups in molecules include polyethyleneimine, polyallylamine, polyvinylamine, polyvinylpyridine, polyvinylpyrrolidine, and a polymer of an amino group-containing monomer such as dimethylaminoethyl acrylate shown in the aforementioned copolymerized monomer of an acrylic pressure-sensitive adhesive.

In order to provide the anchor layer with an antistatic property, an antistatic agent can also be added. Examples of the antistatic agent for providing an antistatic property include an ionic surfactant, conductive polymers such as polyaniline, polythiophene, polypyrrole, and polyquinoxaline, and metal oxides such as tin oxide, antimony oxide, and indium oxide. Particularly, in view of optical properties, an external appearance, an antistatic effect, and stability of an antistatic effect under heat or humidification, the conductive polymers are used preferably. Of those, a water-soluble conductive polymer such as polyaniline and polythiophene, or a water-dispersion conductive polymer is particularly preferably used. The reason for this is as follows: in the case of using a water-soluble conductive polymer or a water-dispersion conductive polymer as a material for forming an antistatic layer, the deterioration of an optical film base material caused by an organic solvent can be suppressed in the process of application.

In the present invention, each layer of a polarizer and a polarizer protective film forming the polarizing plate, and the pressure-sensitive adhesive layer may be provided with a UV-absorbing ability, for example, by the treatment with a UV-absorbing agent such as a salicylate-based compound, a benzophenol-based compound, benzotriazol-based compound, a cyanoacrylate-based compound, and a nickel complex salt-based compound.

The polarizing plate of the present invention may be provided on one of a viewer side and a backlight side of a liquid crystal cell or on both sides thereof without particular limitation.

(Image display apparatus)

Next, an image display apparatus of the present invention will be described. The image display apparatus of the present invention includes at least one polarizing plate of the present invention. Herein, as one example, a liquid crystal display apparatus will be described. However, it is needless to say that the present invention is applicable to any display apparatus requiring a polarizing plate. Specific examples of the image display apparatus to which the polarizing plate of the present invention is applicable include a self-luminous display apparatus such as an electroluminescence (EL) display, a plasma display (PD), and a field emission display (FED). FIG. **2** is a schematic cross-sectional view of a liquid crystal display apparatus according to a preferred embodiment of the present invention. In the illustrated example, a transmission-type liquid crystal display apparatus will be described. However, it is needless to say that the present invention is also applicable to a reflection-type liquid crystal display apparatus or the like.

A liquid crystal display apparatus **100** includes a liquid crystal cell **10,** retardation films **20, 20'** placed so as to interpose the liquid crystal cell **10** therebetween, polarizing plates **30, 30'** placed on outer sides of the retardation films **20, 20',** a light guide plate **40,** a light source **50,** and a reflector **60.** The polarizing plates **30, 30'** are placed so that polarization axes thereof are perpendicular to each other. The liquid crystal cell **10** includes a pair of glass substrates

**11, 11'** and a liquid crystal layer **12** as a display medium placed between the substrates. One substrate **11** is provided with a switching element (typically, TFT) for controlling the electrooptical properties of liquid crystals, a scanning line for providing a gate signal to the switching element, and a signal line for providing a source signal to the switching element (all of which are not shown). The other glass substrate **11'** is provided with a color layer forming a color filter and a shielding layer (black matrix layer) (both of which are not shown) . A distance (cell gap) between the substrates **11**, **11'** is controlled by a spacer **13**. In the liquid crystal display apparatus of the present invention, the polarizing plate of the present invention described above is employed as at least one of the polarizing plates **30, 30'**.

For example, in the case of the liquid crystal display apparatus **100** employing a TN mode, liquid crystal molecules of the liquid crystal layer **12** are aligned in a state with respective polarization axes being shifted by 90° during application of no voltage. In such a state, injected light including light in one direction transmitted through the polarizing plate is twisted by 90° by the liquid crystal molecules. As described above, the polarizing plates are arranged such that the respective polarization axes are perpendicular to each other, and thus light (polarized light) reaching the other polarizing plate transmits through the polarizing plate. Thus, during application of no voltage, the liquid crystal display apparatus **100** provides a white display (normally white mode) . Meanwhile, in the case where a voltage is applied onto the liquid crystal display apparatus **100,** alignment of the liquid crystal molecules in the liquid crystal layer **12** changes. As a result, the light (polarized light) reaching the other polarizing plate cannot transmit through the polarizing plate, and a black display is provided. Displays are switched as described above by pixel by using the active element, to thereby form an image.

Examples

Hereinafter, the present invention will be described specifically with reference to Examples, but the present invention is not limited to the examples. Unless otherwise noted, parts and % in the Examples refer to parts by weight. The evaluation was conducted in the following manner.

<Adhesion between polarizer protective film and polarizer>

The state of a polarizing plate (100 mm × 100 mm) twisted by the hand was evaluated under the following standard.

○: The polarizer and the polarizer protective film are integrated and do not peel from_each other.
Δ: The peeling is recognized at an end of the polarizer and the polarizer protective film.
x: The peeling is recognized between the polarizer and the polarizer protective film.

<External appearance of polarizing plate>

The external appearance of the obtained polarizing plate was evaluated. The evaluation was conducted by visual observation under the following standard with respect to a polarizing plate of 50 mm × 50 mm.

○: No float, streak, and the like are present.
×: No float and streak are observed.
The float refers to the state in which the polarizer and the polarizer protective film are not in intimate contact with each other, and the streak refers to the state in which the polarizer protective film or the polarizer bonds to itself although in a very small area.

<Peripheral unevenness>

The peripheral unevenness of the obtained polarizing plate was evaluated. The evaluation was conducted as follows: a polarizing plate of 32 inches was attached to glass so that the upper plate formed an angle of 0° and the lower plate formed an angle of 90°, the polarizing plate was irradiated with a backlight from the lower plate side, and light leakage was evaluated under the following standard. The evaluation of the light leakage was conducted using a measurement apparatus (two-dimensional color distribution measurement apparatus CA-1500w (trade name) manufactured by Konica Minolta) set on the side of the polarizing plate opposite to the backlight (at a position away from the upper plate by 50 centimeters) . Further, the obtained polarizing plate was subjected to a heating test (80°C, 240 hours) and a humidification test (60°C, 90%RH, 240 hours), and light leakage was evaluated in the same way as the above under the following standard.

O: No light leakage is present.

Δ: Light leakage is observed at an end.
×: Light leakage is observed on the entire surface.

<Measurement of a retardation>

The refractive indices nx, ny, and nz of a sample film were measured with an automatic birefringence measurement apparatus (Automatic Birefringence Analyzer KOBRA-WPR manufactured by Oji Scientific Instruments Co., Ltd.), whereby an in-plane retardation And and a thickness direction retardation Rth were calculated. The measurement temperature was 23˚C, and the measurement wavelength was 590 nm.

<Polarization degree change ratio and transmittance change ratio>

A pressure-sensitive polarizing plate was punched into 25 mm × 50 mm so that a polarizing plate absorption axis was 45˚ with respect to a long side, and a pressure-sensitive adhesive layer of the pressure-sensitive polarizing plate was attached to a glass plate to obtain a measurement sample. The measurement sample was placed in a thermo-hygrostat of 60˚C/95%RH, and taken out after a predetermined time. After the elapse of 30 minutes after the sample was taken out, a polarization degree change ratio and a transmittance change ratio were measured with DOT-3 (manufactured by Murakami Color Research Laboratory).

<Measurement of a thickness>

In the case where the thickness is less than 10 μm, the thickness was measured using a spectrophotometer for a thin film ("Instantaneous multi-measurement system MCPD-2000" (trade name) manufactured by Otsuka Electronics Co., Ltd.). In the case where the thickness is 10 μm or more, the thickness was measured using a digital micrometer "KC-351C" manufactured by Anritsu Corporation.

(Rth change ratio under heating)

A pressure-sensitive polarizing plate was sandwiched with glass plates, and attached thereto so that a polarizing plate absorption axis formed an angle 45˚ on an upper plate and an angle 135˚ on a lower plate with respect to a long side to obtain a measurement sample. The measurement sample was placed in a thermostat at 80˚C, and taken out after a predetermined time, and Rth was measured.

<Rth change ratio under heating and humidification>

A pressure-sensitive polarizing plate was sandwiched with glass plates, and attached thereto so that a polarizing plate absorption axis formed an angle 45˚ on an upper plate and an angle 135˚ on a lower plate with respect to a long side to obtain a measurement sample. The measurement sample was placed in a thermo-hygrostat of 60˚C/90%RH, and taken out after a predetermined time, and Rth was measured.

(Production example 1: production of a polarizer)

A polyvinyl alcohol film with a thickness of 80 μm was dyed in 5 wt% of an iodine aqueous solution (weight ratio: iodine/potassium iodide = 1/10) . Then, the polyvinyl alcohol film was immersed in an aqueous solution containing 3 wt% of boric acid and 2 wt% of potassium iodide, stretched by 5.5 times in an aqueous solution containing 4 wt% of boric acid and 3 wt% of potassium iodide, and immersed in 5 wt% of a potassium iodide aqueous solution. After that, the polyvinyl alcohol film was dried in an oven at 40˚C for 3 minutes to obtain a polarizer with a thickness of 30 μm.

(Production example 2: production of a polarizer protective film containing an acrylic resin having a ring system)

20 parts by weight of methyl methacrylate, 80 parts by weight of acrylamide, 0.3 parts by weight of potassium persulfate, and 1, 500 parts by weight of ion-exchanged water were placed in a reactor, and the reactor was kept at 70˚C while being replaced by nitrogen gas. The reaction was allowed to continue until the monomers were converted to a polymer completely, whereby an aqueous solution of a methyl methacrylate/acrylamide copolymer was obtained. The obtained aqueous solution was used as a suspension. A solution in which 0.05 parts by weight of the methyl methacrylate/acrylamide copolymer suspension were dissolved in 165 parts by weight of ion-exchanged water was supplied to an autoclave made of stainless steel with a capacity of 5 liters provided with a baffle and foudler stirring vane, followed by stirring at 400 rpm, and the system was replaced by nitrogen gas. Next, the following mixing materials

(A) were added to the reaction system with stirring, and temperature thereof was increased to 70˚C.

| | |
|---|---|
| Mixing materials (A): | |
| methacrylic acid | 27 parts by weight |
| methyl methacrylate | 73 parts by weight |
| n-dodecylmercaptan | 0.4 parts by weight |
| 2,2'-azobisisobutyronitrile | 0.2 parts by weight |

The reaction system was kept for 180 minutes with the time at which the inner temperature reached 70˚C being a polymerization initialization time, whereby the polymerization was completed. Then, the cooling of the reaction system, the separation of the polymer, the washing, and the drying were performed in accordance with the ordinary method, whereby a beads-shaped copolymer (a-1) was obtained. The polymerization ratio of the copolymer (a-1) was 98%, and the polymerization average molecular weight thereof was 130,000.

The obtained copolymer (a-1) was supplied to 38 mmϕ biaxial and monoaxial complex type continuous kneading extruder (HTM38, L/D = 47.5, manufactured by CTE). An intramolecular cyclization reaction was performed at a screw rotation number of 75 rpm, a material supply amount of 10 kg/hr, and a cylinder temperature of 290˚C while nitrogen was purged at an amount of 10 L/min from a hopper portion, whereby a pellet-shaped thermoplastic polymer (A-1) was obtained. The thermoplastic polymer (A-1) contained 28 wt% of a glutaric anhydride structural unit, 68 wt% of a methyl methacrylate structural unit, and 4 wt% of a methyl methacrylate structural unit.

Acrylic elastic particles were synthesized separately from the thermoplastic polymer (A-1). The following composition (B) was added to a glass container (capacity: 5 liters) with a cooling unit as an initial adjusting solution.

| | |
|---|---|
| Composition (B) : | |
| deionized water | 120 parts by weight |
| potassium carbonate | 0.5 parts by weight |
| dioctyl sulfosuccinate | 0.5 parts by weight |
| potassium persulfate | 0.005 parts by weight |

While the initial adjusting solution (composition (B)) was stirred in a nitrogen atmosphere, the following composition (C) was added to allow the mixture to react at 70˚C for 30 minutes, whereby a rubber polymer was obtained

| | |
|---|---|
| Composition (C): | |
| butyl acrylate | 53 parts by weight |
| styrene | 17 parts by weight |
| allyl methacrylate (cross-linking agent) | 1 part by weight |

While the mixture was continuously stirred, the following composition (D) was continuously added at 70˚C for 90 minutes. After the completion of the addition, the mixture was kept for 90 minutes to form a shell layer.

| | |
|---|---|
| Composition (D): | |
| methyl methacrylate | 21 parts by weight |
| methacrylic acid | 9 parts by weight |
| potassium persulfate | 0.005 parts by weight |

The obtained polymer latex was coagulated with sulfuric acid and neutralized with caustic soda, followed by washing, filtration, and drying, whereby acrylic elastic particles (B-1) that are a core-shell type rubber-containing polymer were obtained. The average particle diameter of the rubber polymer portion of the acrylic elastic particles (B-1) measured with an electron microscope was 170 nm. Further, the refractive index difference between the obtained acrylic elastic particles (B-1) and the thermoplastic polymer (A-1) was 0.002.

20 parts by weight of the acrylic elastic particles (B-1) were compounded with 80 parts by weight of the thermoplastic polymer (A-1), and the mixture was kneaded at a screw rotation number of 100 rpm, a material supply amount

of 10 kg/hr, and a cylinder temperature of 280˚C while nitrogen gas was purged in an amount of 10 L/min from a hopper portion, using a biaxial extruder TEX30 (L/D = 44.5) manufactured by Japan Steel Works Ltd., whereby a pellet-shaped acrylic resin (C-1) was obtained.

50 g of the obtained acrylic resin (C-1) and 150 g of 2-butanone were placed in a 300-ml separable flask equipped with a stirrer, and the mixture was stirred with a double helical ribbon stirring vane for 24 hours. The obtained solution was filtered with a glass filter of a 1-μm cut, whereby an acrylic resin solution was obtained.

A part of the obtained acrylic resin solution was'placed on a glass plate with a polyethylene terephthalate film (thickness: 100 μm) fixed thereon, whereby a uniform film was formed using a bar coater. The film was heated at 50˚C for 10 minutes to obtain a self-supporting film. The obtained film was peeled from the polyethylene terephthalate film and fixed on a metallic frame. The film was further heated at 100˚C for 10 minutes, at 120˚C for 20 minutes, 140˚C for 20 minutes, and 170˚C for 40 minutes, whereby a polarizer protective film (D-1) containing an acrylic resin having a ring system was obtained.

(Example 1)

(Formation of an easy-adhesion layer)

A solution prepared by adding 66.7 parts of isopropyl alcohol to 100 parts of a silane coupling agent APZ-6601 (manufactured by Dow Corning Toray, Co. , Ltd.) was applied to a corona-treated surface of the film obtained above with a wire bar #5 and a volatile content was evaporated. The thickness of the easy-adhesion layer after evaporation was 50 nm.

(Preparation of an adhesive aqueous solution)

A polyvinyl alcohol-based adhesive aqueous solution was prepared, in which an aqueous solution containing 20 parts by weight of methylol melamine with respect to 100 parts by weight of a polyvinyl alcohol resin modified with an acetoacetyl group (acetylation degree: 13%) was adjusted so that the concentration was 0.5 wt%.

(Production of a polarizing plate)

The polarizer protective film (D-1) was attached using a polyvinyl alcohol-based adhesive aqueous solution so that the easy-adhesion layer surface came into contact with one surface of a polarizer, and a saponified surface of a triacetylcellulose film (KC4UYW (trade name) manufactured by Konica Minolta Opto, Inc.) with a thickness of 40 μm came into contact with the other surface of the polarizer. The polyvinyl alcohol-based adhesive aqueous solution was applied to the easy-adhesion layer surface side and the triacetyl cellulose side of the polarizer protective film (D-1), followed by drying at 85˚C for 10 minutes, whereby a polarizing plate was obtained.

(Formation of a pressure-sensitive adhesive layer)

As a base polymer, a solution (solid content: 30%) containing an acrylic polymer with a weight average molecular weight of 2,000,000 made of a copolymer of butyl acrylate : acrylic acid : 2-hydroxyethyl acrylate = 100 : 5 : 0.1 (weight ratio) was used. 4 parts of Colonate L manufactured by Nippon Polyurethane Industry Co., Ltd., which was an isocyanate-based polyfunctional compound, 0.5 parts of an additive (KBM403 manufactured by Shin-Etsu Silicone Co., Ltd.), and a solvent (ethyl acetate) for adjusting viscosity were added to the acrylic polymer solution with respect to 100 parts of a polymer solid content, whereby a pressure-sensitive adhesive solution (solid content: 12%) was prepared. The pressure-sensitive adhesive solution was applied to a releasing film (a polyethylene terephthalate base material: Diawheel MRF38 manufactured by Mitsubishi Polyester Film Co., Ltd.) so that the thickness after drying was 25 μm, followed by drying in a hot air circulation oven, whereby a pressure-sensitive adhesive layer was formed.

(Production of a pressure-sensitive adhesion type polarizing plate)

The polarizer protective film (D-1) surface of the polarizing plate was subjected to corona treatment at a discharge amount of 133 $w \cdot min/m^2$, and thereafter, a releasing film with the pressure-sensitive adhesive layer formed thereon was attached to the polarizer protective film, whereby a pressure-sensitive adhesive type polarizing plate was produced.

(Evaluation of a polarizing plate)

Table 1 shows the results evaluating the adhesion between the polarizer protective film in the obtained polarizing

plate and the polarizer, the external appearance, and the peripheral unevenness. Further, Table 2 shows the polarization degree change ratio, the transmittance change ratio, the Rth change ratio under heating, and the Rth change ratio under heating and humidification in the obtained polarizing plate.

(Example 2)

A pressure-sensitive adhesive type polarizing plate was produced in the same way as in Example 1 except that a releasing film with the pressure-sensitive adhesive layer formed thereon was attached to the triacetylcellulose film surface of the polarizing plate after the triacetylcellulose film surface was subjected to corona treatment at a discharge amount of 133 w·min/$m^2$ in Example 1.

Table 1 shows the results evaluating the adhesion between the polarizer protective film in the obtained polarizing plate and the polarizer, the external appearance, and the peripheral unevenness.

(Example 3)

A pressure-sensitive adhesive type polarizing plate was produced in the same way as in Example 1 except that the polarizer protective film (D-1) was attached to both surfaces of the polarizer in Example 1.

Table 1 shows the results evaluating the adhesion between the polarizer protective film in the obtained polarizing plate and the polarizer, the external appearance, and the peripheral unevenness. Further, Table 2 shows the Rth change ratio under heating and the Rth change ratio under heating and humidification in the obtained polarizing plate.

(Example 4)

100 parts of an acrylic UV-curable resin (Unidick 17-806 manufactured by Dainippon Ink and Chemicals, Incorporated), 5 parts of a UV-polymerization initiator (Irgacure 907 manufactured by Ciba Specialty Chemicals), and 0.5 parts of a leveling agent (Megafac F407 manufactured by Dainippon Ink and Chemicals, Incorporated) were dispersed in toluene, whereby an application solution of a solid content concentration of 40% was prepared.

The application solution was applied to the triacetylcellulose surface of the polarizing plate produced in Example 1 with a bar coater, followed by heating at 90 °C for 3 minutes, whereby a coating film was formed. After that, the coating film was cured by the irradiation of a UV-ray to form a hard coat layer (thickness: 8 μm).

The same pressure-sensitive adhesive layer as that in Example 1 was attached to the obtained polarizing plate with a hard coat layer, whereby a pressure-sensitive adhesion type polarizing plate was produced.

Table 2 shows the polarization degree change ratio and the transmittance change ratio in the obtained polarizing plate.

(Comparative Example 1)

A pressure-sensitive adhesive type polarizing plate was produced in the same way as in Example 1, except that triacetylcellulose films (KC4UYW (trade name) manufactured by Konica Minolta Opto, Inc.) subjected to saponification with a thickness 40 μm were attached so that the saponified surfaces came into contact with both surfaces of the polarizer in Example 1.

Table 1 shows the results evaluating the adhesion between the polarizer protective film in the obtained polarizing plate and the polarizer, the external appearance, and the peripheral unevenness. Further, Table 2 shows the polarization degree change ratio, the transmittance change ratio, the Rth change ratio under heating, and the Rth change ratio under heating and humidification in the obtained polarizing plate.

[Table 1]

| | Adhesion | External appearance of polarizing plate | Peripheral unevenness | | |
|---|---|---|---|---|---|
| | | | Before test | After heating test | After humidification test |
| Example 1 | ○ | ○ | ○ | ○ | ○ |
| Example 2 | ○ | ○ | ○ | Δ | ○ |
| Example 3 | ○ | ○ | ○ | ○ | ○ |
| Comparative Example 1 | ○ | ○ | ○ | Δ | ○ |

As shown in Table 1, Examples 1 and 3 are excellent in the peripheral unevenness after the heating test compared with Comparative Example 1 (no light leakage) . Further, both in Example 2 and Comparative Example 1, the evaluation of the peripheral unevenness after the heating test is Δ (light leakage is observed at an end) Example 2 is superior to Comparative Example 1 in the point that the thickness of the polarizing plate is thin.

[Table 2]

| | Polarization degree change ratio (%) | Transmittance change ratio (%) | Rth change ratio under heating (%) | Rth change ratio under heating and humidification (%) |
|---|---|---|---|---|
| Example 1 | -0.298* | 1.956* | -0.7 | -2.0 |
| Example 2 | - | - | - | - |
| Example 3 | - | - | -0.7 | -2.0 |
| Example 4 | -0.171* | 1.887* | - | - |
| Comparative Example 1 | -1.130* | 3.229* | -2.2 | -2.9 |
| *Average value of three measurements | | | | |

It is understood from Table 2 that the excellent results are obtained in Examples 1 and 4 in the polymerization degree change ratio and the transmittance change ratio, compared with Comparative Example 1. Further, in Examples 1 and 3, the excellent results are obtained in the Rth change ratio under heating and the Rth change ratio under heating and humidification, compared with Comparative Example 1.

INDUSTRIAL APPLICABILITY

The polarizer protective film and the polarizing plate of the present invention can be preferably used for various kinds of image display apparatuses (liquid crystal display apparatus, organic EL display apparatus, PDP, etc.).

**Claims**

**1.** A polarizer protective film comprising an acrylic resin containing a structural unit represented by the following General Formula (1) and a structural unit represented by the following General Formula (2):

[Chemical Formula 1]

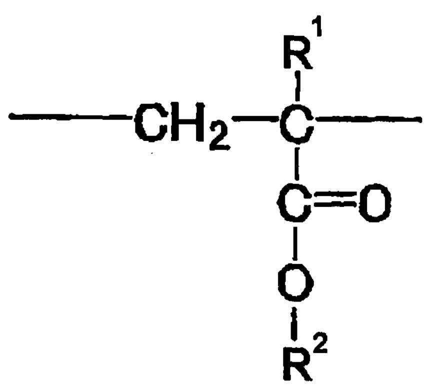

(1)

in General Formula (1), $R^1$ represents a hydrogen atom or an alkyl group containing 1 to 5 carbon atoms, and $R^2$

represents an aliphatic hydrocarbon group containing 1 to 5 carbon atoms or alicyclic hydrocarbon group; and

[Chemical Formula 2]

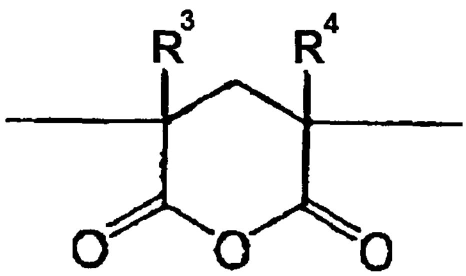

(2)

in General Formula (2), $R^3$ and $R^4$ each represent a hydrogen atom or an alkyl group containing 1 to 5 carbon atoms, which are same as or different from each other.

2. A polarizer protective film according to claim 1, wherein the polarizer protective film has an in-plane retardation Δnd with respect to light having a wavelength of 590 nm of 10 nm or less, a thickness direction retardation Rth with respect to light having a wavelength of 590 nm of 10 nmor less, and a photoelastic coefficient with respect to light having a wavelength of 550 nm of $-2 \times 10^{-12}$ to $2 \times 10^{-12}$ $Pa^{-1}$.

3. A polarizer protective film according to claim 1 or 2, wherein $R^3$ and $R^4$ of the above General Formula (2) are a methyl group and a methyl group, respectively.

4. A polarizer protective film according to any one of claims 1 to 3, wherein the polarizer protective film has a glass transition temperature of 110°C or higher.

5. A polarizer protective film according to any one of claims 1 to 4, wherein the polarizer protective film has a moisture permeability of 3 to 100 $g/m^2 \cdot 24$ hr.

6. A polarizer protective film according to any one of claims 1 to 5, wherein the polarizer protective film has a thickness of 5 to 100 μm.

7. A polarizing plate comprising the polarizer protective film according to any one of claims 1 to 6 on at least one surface of a polarizer formed of a polyvinyl alcohol-based resin, wherein the polarizing plate has a polarization degree change ratio defined by the following Expression (A) after retention for 492 hours under 60°C/95%RH of -0.5 to 0.0%:

$$\text{polarization degree change ratio (\%)} = \{(P_t - P_0)/P_0\} \times 100 \quad (A),$$

where $P_0$ represents initial polarization degree and $P_t$ represents polarization degree after t hour(s).

8. A polarizing plate comprising the polarizer protective film according to any one of claims 1 to 6 on at least one surface of a polarizer formed of a polyvinyl alcohol-based resin, wherein the polarizing plate has a transmittance change ratio defined by the following Expression (B) after retention for 492 hours under 60°C/95%RH of 0.0 to 2.5%:

$$\text{transmittance change ratio (\%)} = \{(Y_t - Y_0)/Y_0\} \times 100 \quad (B),$$

where $Y_0$ represents initial transmittance and $Y_t$ represents transmittance after t hour(s).

**9.** A polarizing plate comprising the polarizer protective film according to any one of claims 1 to 6 on at least one surface of a polarizer formed of a polyvinyl alcohol-based resin, wherein the polarizing plate has an Rth change ratio defined by the following Expression (C) after retention for 48 hours under 80°C of -2.0 to 0.0%:

$$\text{Rth change ratio (\%)} = \{(Rth_t - Rth_0)/Rth_0\} \times 100 \quad (C),$$

where $Rth_0$ represents initial Rth and $Rth_t$ represents Rth after t hour(s).

**10.** A polarizing plate comprising the polarizer protective film according to any one of claims 1 to 6 on at least one surface of a polarizer formed of a polyvinyl alcohol-based resin, wherein the polarizing plate has an Rth change ratio defined by the following Expression (D) after retention for 48 hours under 60°C/95%RH of -2.5 to 0.0%:

$$\text{Rth change ratio (\%)} = \{(Rth_t - Rth_0)/Rth_0\} \times 100 \quad (D),$$

where $Rth_0$ represents initial Rth and $Rth_t$ represents Rth after t hour(s).

**11.** A polarizing plate according to any one of claims 7 to 10, comprising:

the polarizer protective film on one surface of the polarizer; and
a cellulose-based resin film on another surface.

**12.** A polarizing plate according to any one of claims 7 to 10, comprising the polarizer protective film on both surface of the polarizer.

**13.** A polarizing plate according to any one of claims 7 to 12, comprising an easy-adhesion layer and an adhesive layer between the polarizer protective film and the polarizer.

**14.** A polarizing plate according to claim 13, wherein the adhesive layer is formed of a polyvinyl alcohol-based adhesive.

**15.** A polarizing plate according to any one of claims 7 to 14, further comprising a pressure-sensitive adhesive layer as at least one side of an outermost layer.

**16.** An image display apparatus comprising at least one of the polarizing plates according to any one of claims 7 to 15.

Fig.1

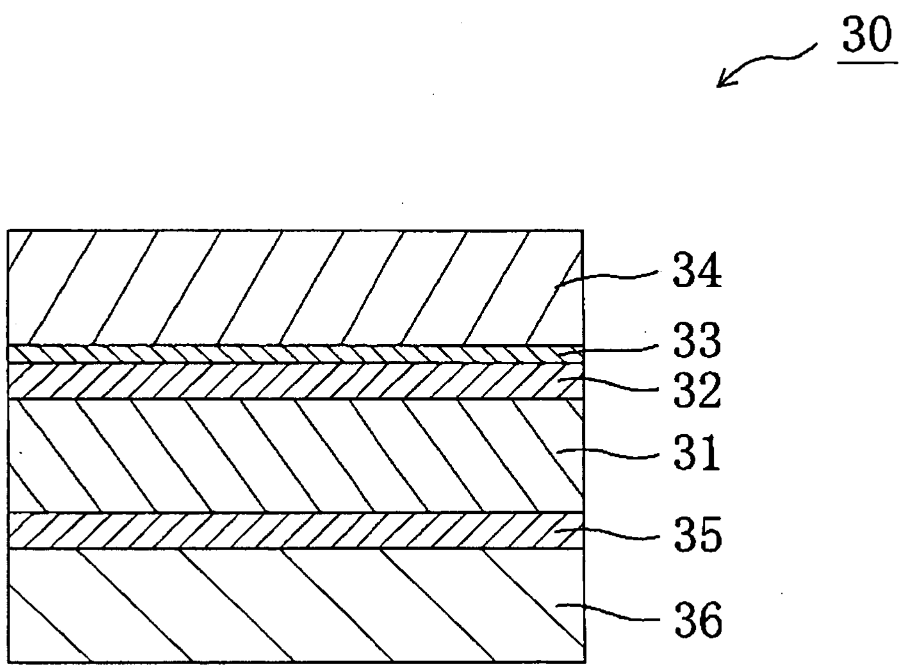

Fig.2

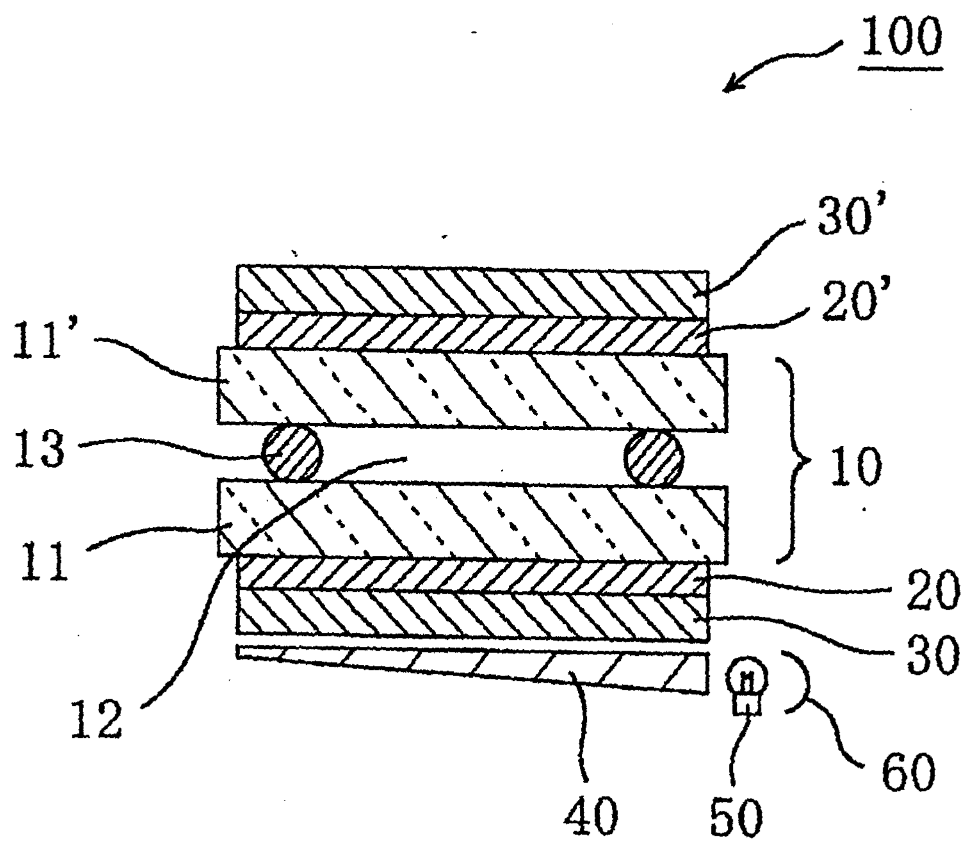

## INTERNATIONAL SEARCH REPORT

International application No.
PCT/JP2006/316899

A. CLASSIFICATION OF SUBJECT MATTER
*G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-2711 A (Toray Industries, Inc.), 08 January, 2004 (08.01.04), Claims 2, 3, 6; Par. No. [0056] & US 2005/0119418 A1 & EP 1496067 A1 & WO 03/080683 A1 | 1-16 |

☐ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 November, 2006 (22.11.06) | 28 November, 2006 (28.11.06) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000356714 A
- JP 5119217 A
- JP 2004291302 A